(19) Europäisches Patentamt / European Patent Office / Office européen des brevets

(11) **EP 4 782 203 A1**

(12) **EUROPEAN PATENT APPLICATION**
published in accordance with Art. 153(4) EPC

(43) Date of publication:
**29.07.2026 Bulletin 2026/31**

(21) Application number: **25876948.8**

(22) Date of filing: **04.09.2025**

(51) International Patent Classification (IPC):
**B32B 9/00** (2006.01) **B32B 27/32** (2006.01)
**B65D 65/40** (2006.01)

(52) Cooperative Patent Classification (CPC):
**B32B 9/00; B32B 27/32; B65D 65/40**

(86) International application number:
**PCT/JP2025/031320**

(87) International publication number:
**WO 2026/079030 (16.04.2026 Gazette 2026/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.10.2024 JP 2024177316**
**11.06.2025 JP 2025097672**

(71) Applicant: **Dai Nippon Printing Co., Ltd.**
**Tokyo 162-8001 (JP)**

(72) Inventors:
• **MORIMOTO, Taro**
  **Tokyo 162-8001 (JP)**
• **SHIBATA, Takafumi**
  **Tokyo 162-8001 (JP)**
• **MIZOSHIRI, Makoto**
  **Tokyo 162-8001 (JP)**
• **KOICHI, Chisayo**
  **Tokyo 162-8001 (JP)**
• **MIYAZAKI, Yusuke**
  **Tokyo 162-8001 (JP)**
• **IWASAKI, Yuya**
  **Tokyo 162-8001 (JP)**
• **TAMADA, Shuhei**
  **Tokyo 162-8001 (JP)**
• **SUZUKI, Tsuyoshi**
  **Tokyo 162-8001 (JP)**

(74) Representative: **Müller-Boré & Partner**
**Patentanwälte PartG mbB**
**Friedenheimer Brücke 21**
**80639 München (DE)**

(54) **BARRIER FILM, LAMINATE, AND PACKAGING BAG**

(57)    Provided is a barrier film provided with a deposition film formed on an OPP film base material and, if necessary, a covering layer, which enables both deterioration of barrier properties after the heat sterilization treatment, and the Gelbo Flex resistance. The present invention provides a barrier film comprising a polypropylene base material, a base layer, and an aluminum oxide deposition film, laminated in this order, wherein
the aluminum oxide deposition film has an intensity ratio P1 of 0.090 or more and 0.170 or less defined by the following equation when X-ray absorption fine structure analysis is performed from a surface opposite to the polypropylene base material side of the barrier film, P1 = (average intensity from 1561.0 eV to 1563.6 eV)/(average intensity from 1566.5 eV to 1571.6 eV).

EP 4 782 203 A1

**Description**

TECHNICAL FIELD

The present invention relates to a barrier film, a laminate and a packaging bag.

BACKGROUND ART

There has hitherto been used a laminated film provided with a film formed on a base material such as a long film or sheet made of plastic or the like in various applications. For example, there has been developed a barrier film provided with a barrier function against oxygen and water vapor by providing a barrier layer composed of a thin film of aluminum oxide or the like on a plastic film.

As a method for producing a barrier film provided with an aluminum oxide thin film, for example, Patent Document 1 discloses a method for producing a barrier film in which the surface of a PET film is subjected to a plasma treatment and then aluminum oxide is deposited.

Meanwhile, in recent years, from the viewpoint of environmental consideration, a mono-material packaging material has been studied for the purpose of improving the recyclability of packaging materials. For example, instead of the polyester film (PET film) which has conventionally been used, a polyolefin film such as a biaxially oriented polypropylene film (OPP film) is used as the base material, and a laminate including a polyolefin film such as a nonoriented polypropylene film (CPP film) as the sealant layer to be laminated with this is being studied as the mono-material packaging material (see Patent Document 2).

Citation List

Patent Documents

Patent Document 1: Japanese Patent No. 7355957
Patent Document 2: Japanese Patent No. 6902231

DISCLOSURE OF THE INVENTION

Problems to be Solved by the Invention

Patent Document 2 discloses a barrier laminate including an OPP film base material, a deposition film, and a barrier coat layer provided on the deposition film, and by controlling the coating film that comprises the barrier coat layer, it is possible to produce a barrier film having excellent transparency and barrier properties after a boiling treatment or a retort treatment, even when using the OPP film base material.

However, in addition to this, the resistance to the flexion test (Gelbo flex test) also has been required, and further improvements were needed.

Means for Solving the Problems

The present inventors have intensively studied to solve the above problems and found a barrier film which has not only excellent barrier properties after a boiling treatment or a retort treatment, but also excellent resistance to the Gelbo Flex test, while using an OPP film base material, leading to the completion of the present invention. Specifically, the present invention provides the following.

(1) A barrier film comprising a polypropylene base material, a base layer, and an aluminum oxide deposition film, laminated in this order, wherein
the aluminum oxide deposition film has an intensity ratio P1 of 0.090 or more and 0.170 or less defined by the following equation when X-ray absorption fine structure analysis is performed from a surface opposite to the polypropylene base material side of the barrier film, P1 = (average intensity from 1561.0 eV to 1563.6 eV)/(average intensity from 1566.5 eV to 1571.6 eV).

(2) The barrier film according to (1), wherein the aluminum oxide deposition film has an intensity ratio P2 of 0.990 or more and 1.040 or less defined by the following equation when X-ray absorption fine structure analysis is performed from a surface opposite to the polypropylene base material side of the barrier film, P2 = (average intensity from 1570.5 eV to 1571.6 eV)/(average intensity from 1566.5 eV to 1567.6 eV).

(3) The barrier film according to (1), wherein a covering layer is laminated on the aluminum oxide deposition film.
(4) The barrier film according to (1), wherein the covering layer has a ratio of silicon atoms to carbon atoms (Si/C) of 1.30 or more and 1.70 or less as measured by X-ray photoelectron spectroscopy (XPS).
(5) The barrier film according to (1), wherein the base layer is a surface resin layer formed on the polypropylene base material.
(6) The barrier film according to (5), wherein the base material layer includes at least a first layer and a second layer, and the first layer is formed on the base layer side, the first layer contains modified polypropylene, and the surface resin layer contains a polyamide resin.
(7) The barrier film according to (6), wherein the polyamide resin contains 25% by mass or more and 100% by mass or less of an amorphous polyamide resin.
(8) A laminate including the barrier film according to any one of (1) to (7), and a sealant layer.
(9) A laminate including a second polypropylene base material, the barrier film according to any one of (1) to (7), and a sealant layer.
(10) A packaging bag including the laminate according to (8).

Effects of the Invention

The barrier film of the present invention has not only excellent barrier properties after a heat sterilization treatment such as a boiling treatment or a retort treatment, but also excellent resistance to the Gelbo Flex test, while using an OPP film base material.

BRIEF DESCRIPTION OF THE DRAWINGS

FIG. 1 is a cross-sectional view illustrating an example of the barrier film according to the present embodiment;
FIG. 2 is a diagram illustrating an example of a film-forming apparatus according to the embodiment of the present invention;
FIG. 3 is a cross-sectional view illustrating an example of the plasma pretreatment mechanism of the film-forming apparatus;
FIG. 4 is a plan view illustrating an example of an electrode section and a magnetic field-forming section of the plasma pretreatment mechanism of the film-forming apparatus;
FIG. 5 is a cross-sectional view illustrating an example of the electrode section and the magnetic field-forming section of the plasma pretreatment mechanism of the film-forming apparatus;
FIG. 6 is a cross-sectional view illustrating an example of the film-forming mechanism of the film-forming apparatus;
FIG. 7 is a cross-sectional view illustrating an example of the laminate including the barrier film of the present invention;
FIG. 8 is a cross-sectional view illustrating another example of the laminate including the barrier film of the present invention;
FIG. 9 is a graph illustrating superimposed XAFS spectra after the normalization in Examples and Comparative Examples;
FIG. 10 is a graph showing an XAFS spectrum after the normalization of the barrier film of Example 1;
FIG. 11 is a graph showing an XAFS spectrum after the normalization of the barrier film of Example 2;
FIG. 12 is a graph showing an XAFS spectrum after the normalization of the barrier film of Example 3;
FIG. 13 is a graph showing an XAFS spectrum after the normalization of the barrier film of Comparative Example 1;
FIG. 14 is a graph showing an XAFS spectrum after the normalization of the barrier film of Comparative Example 2;
FIG. 15 is a graph showing an XAFS spectrum after the normalization of the barrier film of Comparative Example 3;
FIG. 16 is a graph showing an XAFS spectrum after the normalization of the barrier film of Comparative Example 4; and
FIG. 17 is a graph showing an XAFS spectrum after the normalization of the barrier film of Comparative Example 5.

PREFERRED MODE FOR CARRYING OUT THE INVENTION

Specific embodiments of the present invention will be described in detail below, but the present invention is not limited to the following embodiments in any way and can be implemented with appropriate modifications within the scope of the purpose of the present invention. As used herein, the notation "X to Y" (X and Y are arbitrary numbers) means "X or more and Y or less".

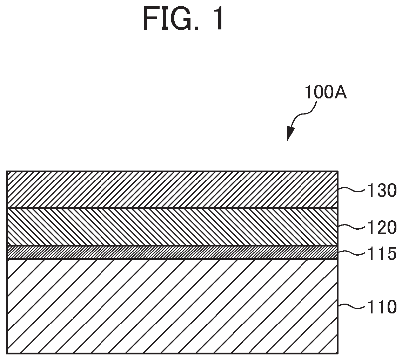

FIG. 1 is a cross-sectional view illustrating an example of the barrier film according to the present embodiment. The barrier film to be produced by using a film-forming apparatus according to the present embodiment includes, for example, like a barrier film 100A shown in FIG. 1, a base material 100 corresponding to the biaxial polypropylene base material of the present invention, a base layer 115, a deposition film 120, and a covering layer 130 as necessary. In the example shown in FIG. 1, a base layer 115 is located on one surface of the base material 100. In the example shown in FIG. 1, the barrier film 100A is composed of the base material 100, the base layer 115, the deposition film 120, and the covering layer 130 laminated sequentially, and the covering layer 130 is located on the surface of the barrier film. The deposition film 120 and the covering layer 130 constitute a barrier layer.

As used herein, "lamination in this order" means that a polypropylene base material, a base layer, an aluminum oxide deposition film, and a covering layer having barrier properties may be laminated merely in this order, and layers such as an anchor coat layer mentioned later may be further laminated between these layers.

Each layer constituting the barrier film 100A will be described below.

[Polypropylene Base Material]

The polypropylene base material 100 is a polypropylene base material which has been subjected to a biaxial orientation treatment. Hereinafter, except when referring to the orientation treatment, the term "polypropylene base material" simply means a polypropylene base material which has been subjected to a biaxial orientation treatment.

The polypropylene base material is composed of at least polypropylene. The polypropylene may be any of a propylene homopolymer, a propylene random copolymer, and a propylene block copolymer, or may be a mixture of two or more selected from these.

The propylene homopolymer is a polymer made of only propylene. The propylene random copolymer is a random copolymer of propylene and an $\alpha$-olefin other than propylene or the like. The propylene block copolymer is a copolymer including a polymer block made of propylene and a polymer block made of at least an $\alpha$-olefin other than propylene or the like. The latter polymer block may be a polymer block composed of propylene and an $\alpha$-olefin other than propylene.

Examples of the $\alpha$-olefin include $\alpha$-olefins having 2 or more and 20 or less carbon atoms, and specific examples thereof include ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene.

Among polypropylenes, it is preferable to use a random copolymer from the viewpoint of transparency. When emphasis is placed on the rigidity and heat resistance of the laminate, it is preferable to use a homopolymer. When emphasis is placed on the impact resistance of the laminate, it is preferable to use a block copolymer.

In one embodiment, the melt flow rate (MFR) of the polypropylene may be 0.1 g/10 min or more and 50 g/10 min or less, or 0.3 g/10 min or more and 30 g/10 min or less, from the viewpoints of the film-forming properties and processability. In one embodiment, the lower limit of the melt flow rate (MFR) of the polypropylene may be 0.1 g/10 min or more, or 0.3 g/10 min or more. In one embodiment, the upper limit of the melt flow rate (MFR) of the polypropylene may be 50 g/10 min or less, or 30 g/10 min or less. MFR of the polypropylene is measured in accordance with ASTM D1238 under the conditions of a temperature of 230°C and a load of 2.16 kg.

As the polypropylene, biomass-derived polypropylene, or mechanically recycled or chemically recycled polypropylene may be used.

The polypropylene content in the polypropylene base material is preferably 70% by mass or more, more preferably 80% by mass or more, still more preferably 90% by mass or more, and yet more preferably 95% by mass or more.

The polypropylene base material may contain a resin material other than polypropylene. Examples of the resin materials include polyolefins such as polyethylene, (meth)acrylic resins, vinyl resins, cellulose resins, polyamides, polyesters, and ionomer resins.

The polypropylene base material may contain additives. Examples of the additives include crosslinking agents, antioxidants, antiblocking agents, slip agents, ultraviolet absorbers, light stabilizers, fillers, reinforcing agents, lubricants, antistatic agents, pigments, and modifying resins.

The polypropylene base material is a base material which has been subjected to a biaxial orientation treatment. This can improve, for example, the heat resistance, impact resistance, water resistance and dimensional stability of the barrier base material. A laminate including such a barrier base material is suitable as a packaging material which is subjected to, for example, a boiling treatment or a retort treatment.

When orientation is performed in the machine direction (machine direction, MD direction of the base material), the orientation ratio is preferably 2 times or more and 15 times or less, and more preferably 5 times or more and 13 times or less. When orientation is performed in the machine direction (machine direction, MD direction of the base material), the lower limit of the orientation ratio is preferably 2 times or more, and more preferably 5 times or more. When orientation is performed in the machine direction (machine direction, MD direction of the base material), the upper limit of the orientation ratio is preferably 15 times or less, and more preferably 13 times or less. When orientation is performed in the transverse direction (direction perpendicular to the MD direction, TD direction), the orientation ratio is preferably 2 times or more and 15 times or less, and more preferably 5 times or more and 13 times or less. When orientation is performed in the transverse direction (direction perpendicular to the MD direction, TD direction), the lower limit of the orientation ratio is preferably 2 times or more, and more preferably 5 times or more. When orientation is performed in the transverse direction (direction perpendicular to the MD direction, TD direction), the upper limit of the orientation ratio is preferably 15 times or less, and more preferably 13 times or less. By setting the orientation ratio at 2 times or more, the strength and heat resistance of the polypropylene base material can be further improved, and when the polypropylene base material is used as the outermost layer, the printability of the polypropylene base material can be improved. From the viewpoint of the breaking limit of the polypropylene base material, the orientation ratio is preferably 15 times or less.

The thickness of the polypropylene base material is preferably 10 $\mu$m or more and 100 $\mu$m or less, more preferably 10 $\mu$m or more and 50 $\mu$m or less, and still more preferably 15 $\mu$m or more and 25 $\mu$m or less. The lower limit of the thickness of the polypropylene base material is preferably 10 $\mu$m or more, more preferably 10 $\mu$m or more, and still more preferably 15 $\mu$m or more. The upper limit of the thickness of the polypropylene base material is preferably 100 $\mu$m or less, more preferably 50 $\mu$m or less, and still more preferably 25 $\mu$m or less. When the thickness is the lower limit or more, for example, the strength and heat resistance of the barrier base material can be further improved. When the thickness is the upper limit or less, for example, the processability of the barrier base material can be further improved.

The polypropylene base material may be a coextruded oriented film. The film can be produced by forming a laminated film using a conventionally known T-die method or inflation method, and then orienting the laminated film. When forming the film by the inflation method, the laminated film may be oriented at the same time.

The polypropylene base material may be subjected to a surface treatment. For example, this can improve the adhesion between the polypropylene base material and other layers. Examples of the surface treatment method include physical treatments such as a corona discharge treatment, an ozone treatment, a low-temperature plasma treatment using one or more gases selected from oxygen gas, argon gas, nitrogen gas and the like, and a glow discharge treatment; and chemical treatments such as an oxidation treatment using chemicals. An easy adhesion layer may be provided on the surface of the polypropylene base material.

When the polypropylene base material is used as the outermost layer of the laminate, it may have a printing layer on the second layer. The image formed on the printing layer is not particularly limited, and examples thereof include letters, patterns, symbols, and combinations thereof. The printing layer can also be formed using biomass-derived ink. This further reduces the environmental impact.

Examples of methods for forming a printing layer include conventionally known printing methods such as a gravure printing method, an offset printing method, and a flexographic printing method. Among them, the flexographic printing method is preferred from the viewpoint of reducing the environmental impact.

The polypropylene base material is preferably transparent. Specifically, it is preferable that the polypropylene base material has a high total light transmittance measured in accordance with JIS K 7361-1:1997. Specifically, the total light transmittance is preferably 70% or more, more preferably 80% or more, and particularly preferably 90% or more.

The base material 100 of a wound body is preferably humidified by a process for forming a base layer or a humidity control process after forming the base layer. Consequently, the barrier properties can be improved. It is possible to prevent base material breakage due to sticking at the time of unwinding during vapor deposition process mentioned later. As an example, humidity control conditions include storage at a temperature of 22°C to 30°C and a relative humidity of 40% to 65% RH for 1 to 7 days. It is also effective to rewind the wound body in advance before storage for humidity control. In such a case, it is also preferable to perform the rewinding process under the above humidity control conditions.

The polypropylene base material may be a multi-layer film including at least a first layer and a second layer. The first layer is a layer on one side of the polypropylene base material (the side on which a barrier layer such as a deposition film is formed), and the second layer is a layer on the other side of the polypropylene base material.

The first layer and the second layer each may be a propylene random copolymer which is a random copolymer of propylene and an $\alpha$-olefin other than propylene. When the first layer and the second layer are random copolymers, the adhesion between the layer and other layers in contact with the layer can be improved. Examples of the $\alpha$-olefin include ethylene, 1-butene, 1-hexene and the like.

The first layer may be a modified polypropylene, such as an acid modified polypropylene having polar groups such as maleic acid, exemplified by ADMER (registered trademark). When the base layer mentioned later is made of a polyamide resin, the adhesion to the polyamide resin is improved.

The polypropylene base material may include a third layer as an intermediate layer between the first layer and the second layer. The intermediate layer preferably contains a homopolymer of polypropylene. The intermediate layer may have a single-layer structure or a multi-layer structure.

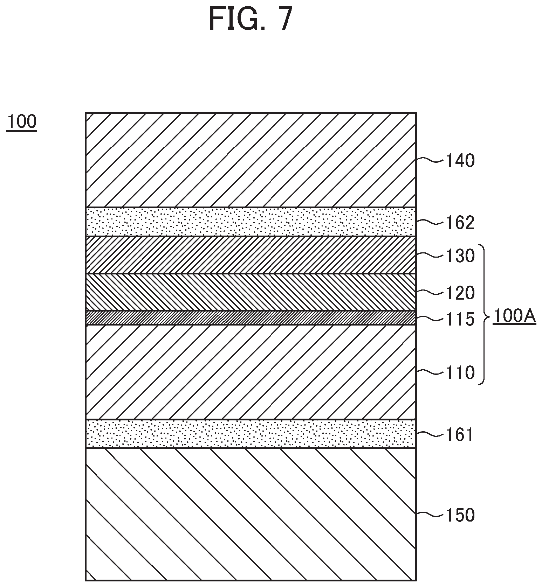

A specific example of the three-layer structure is propylene random copolymer/propylene homopolymer/propylene random copolymer in the order of first layer/third layer/second layer, from the side on which the deposition film is formed. In this case, when the first layer is a propylene random copolymer and the base layer mentioned later is an anchor coat layer, the adhesion to the anchor coat layer is improved. Since the second layer is a propylene random copolymer, the adhesion to the first adhesive layer 161 for laminating a sealant layer 150 is improved, for example, when forming the laminate shown in FIG. 7 mentioned later.

Another example of a specific three-layer structure is a modified polypropylene/propylene homopolymer/propylene random copolymer, in the order of first layer/third layer/second layer, from the side on which the deposition film is formed. In this case, when the first layer is made of modified polypropylene, in case the below-mentioned base layer is made of a polyamide resin, the adhesion to the polyamide resin is improved. Since the third layer is made of a propylene random copolymer, the adhesion to the first adhesive layer 161 for laminating the sealant layer 150 is improved, for example, when forming the laminate shown in FIG. 7 mentioned later.

[Base layer]

The base layer 150 is formed on the surface of the base material 100 on which the deposition film 120 is formed. When the base layer is a highly heat-resistant surface resin layer made of a high-melting point resin material or a material with a high glass transition point, as mentioned later, the improved vapor deposition resistance promotes migration of the vapor deposition material, resulting in a deposition film made of a dense, continuous layer with few gaps and excellent flexibility. Since the base layer is made of a highly heat-resistant material, the resistance to a heat sterilization treatment is also improved. When the base layer is an anchor coat layer formed by coating mentioned later, the surface of the base material can be made smoother, promoting migration of the vapor deposition material and increasing the adhesive strength between the polypropylene base material and the deposition film, thus obtaining a deposition film composed of a dense, continuous layer with few gaps and excellent flexibility. These properties make it possible to obtain high gas barrier properties, and also to prevent the breakage of the deposition film and the covering layer due to deformation or bending of the film, and the resulting deterioration of the gas barrier properties. Thus, it is possible to obtain a barrier film having excellent heat resistance that can withstand the heat sterilization treatment.

(Surface Resin Layer)

The base layer is preferably a surface resin layer. By providing, on a polypropylene base material, a highly heat-resistant surface resin layer which preferably contains a resin material having a melting point of 180°C or higher (hereinafter also referred to as high-melting-point resin material) or a material having a high glass transition point (hereinafter also referred to as high Tg material), a dense deposition film with few gaps can be formed on the surface resin layer, thus making it possible to improve the gas barrier properties.

The melting point of the high-melting-point resin material is preferably 100°C or higher, more preferably 180°C or higher, and particularly preferably 200°C or higher. By setting the melting point of the high-melting-point material at 100°C or higher, when the first layer is a copolymer of propylene and other monomer or modified polypropylene, the first layer can be protected from the vapor deposition material. By setting the melting point of the high-melting-point resin material at 180°C or higher, the density of the vapor deposition film can be improved, and the gas barrier properties can be further improved. The resistance of the laminate to the heat sterilization treatment can be further improved. From the viewpoint of film-forming properties, the melting point of the high-melting-point resin material is preferably 265°C or lower, more preferably 260°C or lower, and still more preferably 250°C or lower. As used herein, the melting point can be measured in accordance with JIS K7121:2012 (Method for Measuring Transition Temperature of Plastics). Specifically, the melting point can be determined by measuring a DSC curve at a heating rate of 10°C/min using a differential scanning calorimetry (DSC) device.

The glass transition point of the high Tg material is preferably 90°C or higher, more preferably 100°C or higher, and still more preferably 120°C or higher. By setting the melting point of the high Tg material at 90°C or higher, when the first layer contains a copolymer of propylene and other monomers or modified polypropylene, the first layer can be protected from the vapor deposition material. By setting the glass transition point of the high Tg material at 120°C or higher, the density of the deposition film can be improved, and the gas barrier properties can be further improved. The resistance of the laminate to the heat sterilization treatment can be further improved. From the viewpoint of the film-forming properties, the glass transition point of the high Tg material is preferably 200°C or lower, more preferably 180°C or lower, and still more preferably 160°C or lower.

The difference between the melting point of the high-melting-point resin material included in the surface resin layer and the melting point of the polypropylene included in the biaxially oriented polypropylene base material is preferably 20 to 100°C, and more preferably 20 to 70°C. The lower limit of the difference between the melting point of the high-melting-point resin material included in the surface resin layer and the melting point of the polypropylene included in the biaxially oriented polypropylene base material is preferably 20°C or higher. The upper limit of the difference between the melting point of the high-melting-point resin material included in the surface resin layer and the melting point of the polypropylene included in the biaxially oriented polypropylene base material is preferably 100°C or lower, and more preferably 70°C or lower. When the difference in melting point is 20°C or higher, the density of the deposition film can be further improved, and the gas barrier properties can be further improved. The resistance of the laminate to the heat sterilization treatment can be further improved. When the difference in melting point is 100°C or lower, the film-forming properties can be further improved.

The highly heat-resistant material preferably has polar groups. In the present invention, the polar group refers to a group containing one or more heteroatoms, and examples thereof include an ester group, an epoxy group, a hydroxyl group, an amino group, an amide group, a carboxyl group, a carbonyl group, a carboxylic anhydride group, a sulfone group, a thiol group, and a halogen group. Among them, from the viewpoint of the laminate strength of the packaging container, a hydroxyl group, an ester group, an amino group, an amide group, a carboxyl group, and a carbonyl group are preferred, and a hydroxyl group is more preferred.

The highly heat-resistant material can be used without particular limitation as long as it has a melting point of 180°C or higher or a glass transition point of 90°C or higher. Examples of the highly heat-resistant material include vinyl resin, polyamide, polyimide, polyester, (meth)acrylic resin, cellulose resin, polyolefin resin, and ionomer resin.

In the present invention, the highly heat-resistant material is particularly preferably a resin material having a melting point of 180°C or higher or a glass transition point of 90°C or higher, and having polar groups, and is preferably an ethylene-vinyl alcohol copolymer, polyvinyl alcohol, polyester, or polyamide, and more preferably polyamide such as nylon 6 (hereinafter "nylon" is registered trademark), nylon 6,6, aromatic-containing nylon, and amorphous nylon (amorphous polyamide) are more preferred. By using such a resin material, the gas barrier properties of the deposition film formed on the surface resin layer can be effectively improved.

By using polyamide as a highly heat-resistant material, it is possible to suppress deterioration of the gas barrier properties even when the barrier laminate is heated. As the highly heat-resistant material, polyamide containing a benzene ring (aromaticity) is preferred from the viewpoint of the mechanical strength and gas barrier properties. The polyamide containing a benzene ring can be used in combination with other materials and co-extruded. Examples of the polyamide containing a benzene ring include nylon MXD6 manufactured by Mitsubishi Gas Chemical Company, Inc. and the like.

The polyamide containing a benzene ring is a polyamide containing a benzene ring in either or both of structural units derived from diamine or dicarboxylic acid. It may also be a copolymer of one or more diamines and one or more dicarboxylic acids. A mixture of two or more copolymers may also be used. Examples of the copolymer include a copolymer of a diamine containing a benzene ring and an aliphatic dicarboxylic acid, a copolymer of an aliphatic diamine and a dicarboxylic acid containing a benzene ring, a copolymer of a diamine containing a benzene ring, a dicarboxylic acid containing a benzene ring and an aliphatic dicarboxylic acid, and a copolymer of an aliphatic diamine, a diamine containing a benzene ring and a dicarboxylic acid containing a benzene ring.

The surface resin layer may contain a polyamide which does not contain a benzene ring. Polyester, an acrylic resin, an ionomer resin and the like may be added to the extent that they do not affect the processability and physical properties.

Examples of the diamine containing a benzene ring include metaxylenediamine, paraxylenediamine, metaphenylenediamine, paraphenylenediamine and the like. One or more of them are used.

Examples of the dicarboxylic acid containing a benzene ring include aromatic dicarboxylic acids such as terephthalic acid (TPA) and isophthalic acid (IPA); and naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One or more of them are used.

Examples of the aliphatic diamine include linear aliphatic diamines such as 1,4-butanediamine, 1,5-pentanediamine, 1,6-hexanediamine (hexamethylenediamine), 1,7-heptanediamine, 1,8-octanediamine, 1,9-nonanediamine (NDA), 1,10-decanediamine (DDA), 1,11-undecanediamine, and 1,12-dodecanediamine; branched aliphatic diamines such as 2-methyl-1,8-octanediamine (MODA), 4-methyl-1,8-octanediamine, 5-methyl-1,9-nonanediamine, 2,2,4-/2,4,4-trimethyl-1,6-hexanediamine, 2-methyl-1,5-pentanediamine, 2-methyl-1,6-hexanediamine, and 2-methyl-1,7-heptanediamine; and alicyclic diamines such as isophoronediamine, norbornanedimethylamine, and tricyclodecanedimethylamine. One or more of them are used.

The aliphatic dicarboxylic acid is an aliphatic dicarboxylic acid having 2 to 20 carbon atoms. In consideration of the polymerization suitability and processability, adipic acid is most preferred, but examples of other dicarboxylic acids include oxalic acid, malonic acid, succinic acid, glutaric acid, pimelic acid, suberic acid, azelaic acid, sebacic acid, undecanedioic acid, dodecadioic acid, hexadecadioic acid, eicosanedioic acid, eicosadienedioic acid, and 2,2,4-trimethyladipic acid. One or more of them are used.

Examples of the polyamide containing no benzene ring include polyamides 6, 7, 10, 11, 12, 410, 56, 66, 69, 610, 611, 612, 1010 and the like. The surface resin layer may contain one or more of them.

The surface resin layer preferably contains 20% by mass or more, more preferably 40% by mass or more, still more preferably 60% by mass or more, and yet more preferably 80% by mass or more, of the polyamide containing a benzene ring relative to the entire surface resin layer. By containing 20% by mass or more of the polyamide containing a benzene ring, since hydrothermal swelling can be suppressed, it is possible to improve the adhesion to the deposition film and reduce deterioration of the barrier performance of the deposition film during heat sterilization by boiling or retorting. When the content is less than 20% by mass, the adhesion to the deposition film may be poor and the barrier may be reduced during heat sterilization.

The surface resin layer preferably contains 20% by mass or more, more preferably 30% by mass or more, and still more preferably 40% by mass or more, of a crystalline polyamide. By including 20% by mass or more of the crystalline polyamide, gas barrier properties can be improved and hydrothermal swelling can be suppressed. Examples of the crystalline polyamide include a copolymer of metaxylenediamine and adipic acid, a copolymer of hexamethylenediamine and terephthalic acid, polyamide 6 and the like.

The surface resin layer preferably contains 90% by mass or less, more preferably 80% by mass or less, and still more preferably 70% by mass or less, of the crystalline polyamide. This allows an amorphous polyamide mentioned later to be mixed.

The surface resin layer preferably contains 25% by mass or more, more preferably 30% by mass or more, and still more preferably 40% by mass or more, of the amorphous polyamide. By including 25% by mass or more of the amorphous polyamide, the extrusion suitability and stretchability are improved, thus making it easier to produce the base film 10.

The surface resin layer preferably contains 100% by mass or less, more preferably 80% by mass or less, still more preferably 70% by mass or less, and yet more preferably 60% by mass or less, of the amorphous polyamide. This allows the crystalline polyamide to be mixed.

In the present disclosure, "amorphous polyamide" means a polyamide which does not have a distinct melting point. Specifically, this refers to a polyamide having a crystalline melting enthalpy $\Delta Hm$ of 5 J/g or less. The crystalline melting enthalpy is preferably 3 J/g or less, and more preferably 1 J/g or less. In the present disclosure, "crystalline polyamide" means a polyamide which has a distinct melting point. Specifically, this refers to a polyamide having a crystalline melting enthalpy $\Delta Hm$ of more than 5 J/g. The crystalline melting enthalpy is determined by differential scanning calorimetry (DSC) in accordance with JIS K 7121:2012 and JIS K 7122:2012.

The amorphous polyamides may be an amorphous aromatic polyamide, an amorphous alicyclic polyamide, or an amorphous aliphatic polyamide.

Examples of the amorphous aromatic polyamide include a copolymer of 1,6-hexanediamine and isophthalic acid, a copolymer of metaxylenediamine and isophthalic acid, a copolymer of 1,6-hexanediamine, isophthalic acid and terephthalic acid, a copolymer of metaxylenediamine, adipic acid and isophthalic acid, a copolymer of 2-methyl-1,5-pentanediamine, isophthalic acid, and terephthalic acid, a copolymer of 2,2,4-trimethylhexamethylenediamine and terephthalic acid and the like. Examples of the copolymer of 1,6-hexanediamine and isophthalic acid and terephthalic acid include a copolymer of 1,6-hexanediamine and dicarboxylic acid in which the molar ratio of isophthalic acid/terephthalic acid is 7/3, and a copolymer of 1,6-hexanediamine and dicarboxylic acid in which the molar ratio of isophthalic acid/terephthalic acid is 1/1. Examples of the copolymer of metaxylenediamine, adipic acid and isophthalic acid include a copolymer of metaxylenediamine and a dicarboxylic acid in which the molar ratio of adipic acid/isophthalic acid is 1/1. Examples of the copolymer of 2-methyl-1,5-pentanediamine, isophthalic acid and terephthalic acid include a copolymer of 2-methyl-1,5-pentanediamine and dicarboxylic acid in which the molar ratio of isophthalic acid/terephthalic acid is 7/3.

Examples of the crystalline aromatic polyamide include a copolymer of metaxylenediamine and adipic acid, and a copolymer of metaxylenediamine, adipic acid and isophthalic acid. Examples of the copolymer of metaxylenediamine, adipic acid and isophthalic acid include a copolymer of metaxylenediamine and dicarboxylic acid in which the molar ratio of adipic acid/isophthalic acid is 93/7, and a copolymer of metaxylenediamine and dicarboxylic acid in which the molar ratio of adipic acid/isophthalic acid is 8/2.

Examples of the amorphous alicyclic polyamide include a copolymer of 4,4'-methylenebis(2-methylcyclohexylamine) and dodecanedioic acid (PA MACM12), a copolymer of 4,4'-methylenebis(2-methylcyclohexylamine), 4,4'-methylenebis(cyclohexylamine), and dodecanedioic acid (PA MACM12/PACM12), a copolymer of 4,4'-methylenebis(2-methylcyclohexylamine), isophthalic acid, and dodecanedioic acid (PA MACMI/12), a copolymer of 4,4'-methylenebis(2-methylcyclohexylamine), isophthalic acid, terephthalic acid, and dodecanedioic acid (PA MACMI/MACMT/12), and a copolymer of 4,4'-methylenebis(2-methylcyclohexylamine) and tetradecanedioic acid (PA MACM14).

Among them, it is also preferable to use an amorphous aromatic polyamide in combination with a crystalline aliphatic polyamide. In this case, it is possible to set the content of the amorphous aromatic polyamide at 50 to 95% by mass and to set the content of the crystalline aliphatic polyamide at 5 to 50% by mass, and preferably to set the content of the amorphous aromatic polyamide at 70 to 90% by mass and to set the content of the crystalline aliphatic polyamide at 10 to 30% by mass. This achieves the effects of improving film-forming properties and reducing material costs without impairing the heat resistance and gas barrier properties.

Among them, it is also preferable to use an amorphous alicyclic polyamide in combination with a crystalline aliphatic polyamide. In this case, it is possible to set the content of the amorphous alicyclic polyamide at 50 to 95% by mass and to set the content of the crystalline aliphatic polyamide at 5 to 50% by mass, and preferably to set the content of the amorphous alicyclic polyamide at 70 to 92% by mass and to set the content of the crystalline aliphatic polyamide at 8 to 30% by mass. This achieves the effects of improving film-forming properties and reducing material costs without impairing the heat resistance and gas barrier properties.

The crystalline aliphatic polyamide to be used in combination is preferably PA6, PA11, PA12, PA66, PA610, PA612, PA6/66, and PA6/66/12, from the viewpoint of improving physical properties such as abrasion resistance, cold resistance, impact resistance, and oil resistance.

The melting point of the crystalline aliphatic polyamide is preferably 170°C or higher, and more preferably 180°C or higher. The melting point of the crystalline aliphatic polyamide is preferably 300°C or lower, more preferably 250°C or lower, still more preferably 230°C or lower, still more preferably 220°C or lower, and particularly preferably 215°C or lower or 210°C or lower. In the present disclosure, the melting point is measured by differential scanning calorimetry (DSC). If the melting point is low, for example, when the polypropylene and the crystalline aliphatic polyamide are coextruded to form a co-extruded resin film, the difference in melting point between the polypropylene and the crystalline aliphatic polyamide decreases, thus making it possible to improve the moldability. For example, the melting point of the crystalline aliphatic polyamide is preferably 170°C or higher and 300°C or lower, more preferably 170°C or higher and 250°C or lower, still more preferably 170°C or higher and 230°C or lower, yet more preferably 170°C or higher and 220°C or lower, and particularly preferably 180°C or higher and 215°C or lower, or 180°C or higher and 210°C or lower.

The thickness of the surface resin layer is preferably 0.1 $\mu$m or more and 5 $\mu$m or less, and more preferably 0.2 $\mu$m or more and 2 $\mu$m or less. The lower limit of the thickness of the surface resin layer is preferably 0.1 $\mu$m or more, and more preferably 0.2 $\mu$m or more. The upper limit of the thickness of the surface resin layer is preferably 5 $\mu$m or less, and more preferably 2 $\mu$m or less. By making the thickness of the surface resin layer 0.1 $\mu$m or more, the density of the deposition film can be further improved, and the gas barrier properties can be further improved. By making the thickness 5 $\mu$m or less, the film-forming properties and processability can be further improved.

The surface resin layer can be formed by melt extrusion. The polypropylene base material of the present invention may be formed by extrusion molding on a biaxially oriented polypropylene film, or the polypropylene base material of the present invention may be formed by multilayer co-extrusion with polypropylene, followed by orientation.

The base layer may be an anchor coat layer. The anchor coat layer can be formed by coating using a resin material having polar groups. As the resin material having polar groups, ethylene-vinyl alcohol copolymer (EVOH), polyvinyl alcohol (PVA), polyester, polyethyleneimine, hydroxyl group-containing (meth)acrylic resin, nylon 6, nylon 6,6, aromatic-containing nylon, amorphous nylon, polyurethane and the like are preferred, and hydroxyl group-containing (meth)acrylic resin, ethylene-vinyl alcohol copolymer, and polyvinyl alcohol are more preferred. As the resin material having polar groups, from the viewpoint of the gas barrier properties after the heat sterilization treatment due to smoothness and high cohesive energy, a (meth)acrylic resin having urethane groups and hydroxyl groups is particularly preferred.

From the viewpoint of the adhesion to the deposition film, it is preferable to add a silane coupling agent to the anchor coat layer. Silane coupling agents mentioned below can be used as the silane coupling agent.

In the present invention, the anchor coat layer can be formed by using an aqueous emulsion or a solvent-based emulsion. Specific examples of the aqueous emulsion include a polyamide-based emulsion, a polyethylene-based emulsion, and a polyurethane-based emulsion, and specific examples of the solvent-based emulsion include a polyester-based emulsion.

As the polyurethane-based emulsion, for example, a mixture solution of a polyurethane-based emulsion and an emulsion of an oxazoline group-containing polymer is preferably used. The polyurethane-based emulsion may further contain a silane coupling agent.

The thickness of the anchor coat layer is preferably 0.02 $\mu$m or more and 5 $\mu$m or less, more preferably 0.05 $\mu$m or more and 2 $\mu$m or less, still more preferably 0.1 $\mu$m or more and 1 $\mu$m or less, and still more preferably 0.2 $\mu$m or more and 0.5 $\mu$m or less. The lower limit of the thickness of the anchor coat layer is preferably 0.02 $\mu$m or more, more preferably 0.05 $\mu$m or more, still more preferably 0.1 $\mu$m or more, and yet more preferably 0.2 $\mu$m or more. The upper limit of the thickness of the anchor coat layer is preferably 5 $\mu$m or less, more preferably 2 $\mu$m or less, still more preferably 1 $\mu$m or less, and yet more preferably 0.5 $\mu$m or less. By setting the thickness of the anchor coat layer at 0.02 $\mu$m or more, the smoothness can be further improved, and the gas barrier properties after vapor deposition can be further improved. By setting the thickness of the anchor coat layer at 5 $\mu$m or less, the processability and productivity can be further improved.

The anchor coat layer may be formed by coating (applying, coating) on a biaxially oriented polypropylene base material, or may be formed by coating on a polypropylene film, followed by biaxial orientation.

[Deposition Film]

Then, the deposition film 120 will be described. The deposition film contains aluminum oxide which is an inorganic oxide. Aluminum oxide is at least partially present in a state of $Al_2O_3$ formed in the deposition film. The deposition film may further contain silicon oxide, silicon nitride, silicon oxynitride, silicon carbide, or another metal oxide such as magnesium oxide, titanium oxide, tin oxide, indium oxide, zinc oxide, and zirconium oxide, or a nitride or carbide of these metals.

The lower limit of the thickness of the deposition film is preferably 3 nm or more, and more preferably 5 nm or more. The upper limit is preferably 100 nm or less, more preferably 50 nm or less, and particularly preferably 15 nm or less.

The "aluminum oxide deposition film" in the present invention means a "deposition film containing aluminum oxide" as described above, and may include, in addition to aluminum oxide $Al_2O_3$, aluminum hydroxide oxide $AlO(OH)$, aluminum hydroxide $Al(OH)_3$ and the like. The details will now be described.

(XAFS Spectral Analysis)

XAFS analysis obtains an X-ray absorption fine structure (XAFS) spectrum by irradiating X-rays from the surface side of the deposition surface of the barrier film (when a covering layer is present, from the covering layer side) and measuring the amount of absorption. The details of the measurement conditions and analysis conditions will be mentioned in Examples.

In particular, the XAFS spectral analysis with soft X-rays using synchrotron radiation can obtain bulk information on the entire deposition film, not partial information on the deposition film surface side, and can obtain information on the size of hydroxyl groups in the aluminum oxide deposition film. Even when a covering layer or the like is present on the surface of the deposition film, it is possible to obtain information on the deposition film with the covering layer present by irradiating the deposition film from the covering layer surface side through the covering layer.

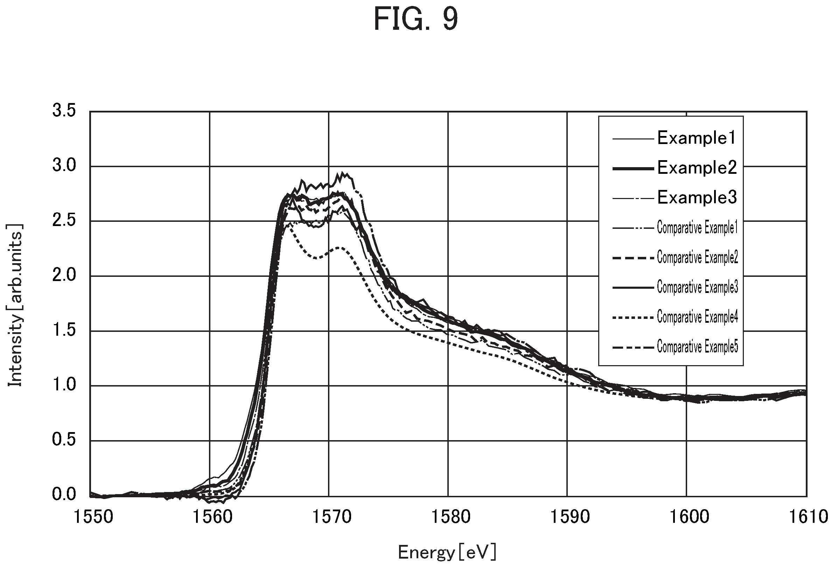

FIG. 9 shows the normalized results of XAFS measurement of the barrier films in Examples 1 to 3 and Comparative Examples 1 to 5 mentioned later. In FIG. 9, the vertical axis represents absorption intensity (a.u.), and the horizontal axis represents energy (eV).

The barrier film of the present invention is a barrier film having the lower limit of an intensity ratio P1 defined below of 0.090 or more and 0.170 or less. In the barrier film of the present invention, the barrier film is a barrier film having the lower limit of an intensity ratio P1 defined below of 0.090 or more. In the barrier film of the present invention, the barrier film is a barrier film having the upper limit of an intensity ratio P1 defined below of 0.170 or less.

P1 = (average intensity from 1561.0 eV to 1563.6 eV)/(average intensity from 1566.5 eV to 1571.6 eV)

Here, the numerator (average intensity from 1561.0 eV to 1563.6 eV) is the intensity derived from metallic aluminum, and the denominator (average intensity from 1566.5 eV to 1571.6 eV) is the intensity derived from aluminum oxide + aluminum hydroxide. Therefore, the intensity ratio P1 is a value which reflects the amount of metallic aluminum present.

The intensity ratio P1 is preferably 0.090 or more and 0.170 or less, more preferably 0.095 or more and 0.160 or less, and still more preferably 0.100 or more and 0.150 or less. The lower limit of the intensity ratio P1 is preferably 0.090 or more, more preferably 0.095 or more, and still more preferably 0.100 or more. The upper limit of the intensity ratio P1 is preferably 0.170 or less, more preferably 0.160 or less, and still more preferably 0.150 or less.

It is not preferred that the intensity ratio P1 is less than 0.090 because the Gelbo Flex resistance deteriorates, and it is not preferred that the intensity ratio exceeds 0.170 because the barrier properties may deteriorate due to the humidity when measuring the oxygen transmittance, and the resistance to the heat sterilization treatment deteriorates.

The intensity ratio P1 of the barrier film can be adjusted by controlling the humidity of the polypropylene base material including the base layer, plasma pretreatment, whether or not to use a plasma-assisted treatment or cold trap during vapor deposition, and the combination of the aging treatment after the film-forming process and the aging treatment after the covering layer-forming process. In particular, by controlling the light transmittance at a wavelength of 366 nm by adjusting the oxygen supply amount in the film-forming process, it is possible to obtain a barrier film which has not only excellent barrier properties after the heat sterilization but also excellent resistance to the Gelbo Flex test. These results will be mentioned in detail in the description of production method and Examples below.

In the barrier film of the present invention, the intensity ratio P2 defined below is preferably 1.000 or more and 1.040 or less. In the barrier film of the present invention, the lower limit of the intensity ratio P2 defined below is preferably 1.000 or more. In the barrier film of the present invention, the upper limit of the intensity ratio P2 defined below is preferably 1.040 or less. P2 = (average intensity from 1570.5 eV to 1571.6 eV)/(average intensity from 1566.5 eV to 1567.6 eV)

Here, the numerator (average intensity from 1570.5 eV to 1571.6 eV) is the intensity derived from aluminum hydroxide, and the denominator (average intensity from 1566.5 eV to 1567.6 eV) is the intensity derived from aluminum oxide. Therefore, the intensity ratio P2 is a value which reflects the amount of aluminum hydroxide present.

The intensity ratio P2 is preferably 0.990 or more and 1.040 or less, and more preferably 1.000 or more and 1.030 or less. The lower limit of the intensity ratio P2 is preferably 0.990 or more, and more preferably 1.000 or more. The upper limit of the intensity ratio P2 is preferably 1.040 or less, and more preferably 1.030 or less.

It is not preferred that the intensity ratio P1 is less than 0.990 because the Gelbo Flex resistance deteriorates, and it is not preferred that when the intensity ratio exceeds 1.040 because barrier properties of the barrier film alone deteriorate.

It is considered that an aluminum oxide film has better flexibility than a crystalline film, and therefore the amorphous aluminum oxide film is preferred for use as the barrier film. However, it was difficult to determine whether it is crystalline or amorphous using XRD, which is a conventional X-ray analysis, except in case where a clear crystalline peak can be confirmed.

In the XAFS spectrum of the present invention, there is an absorption shoulder between 1566.0 eV and 1567.0 eV, which confirms that the aluminum oxide film is amorphous. The intensity ratio P2 provides information on the amount of hydroxyl groups in the aluminum oxide film.

The adjustment of the intensity ratio P2 in the barrier film can be performed in the same manner as the adjustment of the intensity ratio P1.

[Covering Layer]

The covering layer 130 formed on the deposition film 120 as necessary is a covering layer (barrier coat layer) which protects the deposition film mechanically and chemically and improves the barrier performance.

The covering layer is formed by applying a barrier coating agent on the deposition film and solidifying it. For example, it can be a cured product of a resin composition containing an alkoxysilane and a hydroxyl-containing water-soluble resin (water-soluble polymer), and optionally containing a silane coupling agent, a sol-gel catalyst, an acid and the like. Other barrier coating agents can be formed using a 2-part curing urethane resin consisting of a base agent such as an acrylic polyol and a curing agent, a water-based emulsion, or a solvent-based emulsion.

Specific examples of the water-based emulsion include a polyamide-based emulsion, a polyethylene-based emulsion, a polyurethane-based emulsion and the like, and specific examples of the solvent-based emulsion include a polyester-based emulsion and the like.

As the polyurethane emulsion, for example, a mixture solution of a polyurethane emulsion and an emulsion of an oxazoline group-containing polymer is preferably used. Furthermore, the polyurethane emulsion may contain a silane coupling agent.

As the metal alkoxide, at least one metal alkoxide represented by a formula: $R1_nM(OR^2)_m$ (wherein, $R_1$ and $R_2$ each represent an organic group having 1 to 8 carbon atoms, M represents a metal atom, n represents an integer of 0 or more, m represents an integer of 1 or more, and n + m represents the valency of M) is preferable. Examples of the metal atom represented by M of the metal alkoxide include silicon, zirconium, titanium, aluminum, and the like. For example, it is preferable to use an alkoxysilane with Si as M.

The above-mentioned alkoxysilane is represented by, for example, a formula: $Si(ORa)_4$ (wherein, Ra represents a lower alkyl group). In the above, as the Ra, a methyl group, an ethyl group, an n-propyl group, an n-butyl group and the like are used. Specific examples of such an alkoxysilane include tetramethoxysilane $Si(OCH_3)_4$, tetraethoxysilane $Si(OC_2H_5)_4$, tetrapropoxysilane $Si(OC_3H_7)_4$, tetrabutoxysilane $Si(OC_4H_9)_4$, and the like. The above alkoxides may be used in combination of two or more.

As the silane coupling agent, those having a reactive group such as a vinyl group, an epoxy group, a methacrylic group, and an amino group can be used. In particular, an organoalkoxysilane including an epoxy group is preferable. For example, $\gamma$-glycidoxypropyltrimethoxysilane, $\gamma$-glycidoxypropylmethyldimethoxysilane, $\gamma$-glycidoxypropyldimethyl-methoxysilane, $\gamma$-glycidoxypropyltriethoxysilane, $\gamma$-glycidoxypropylmethyldiethoxysilane, $\gamma$-glycidoxypropyldimethy-lethoxysilane, or $\beta$-(3,4-epoxycyclohexyl)ethyltrimethoxysilane can be used. The above silane coupling agents may be used alone or as a mixture of two or more.

In particular, the crosslinking density of a cured film of a covering layer made of a bifunctional compound such as $\gamma$-glycidoxypropylmethyldimethoxysilane and $\gamma$-glycidoxypropylmethyldiethoxysilane is lower than the crosslinking density of a system using a trialkoxysilane. Accordingly, the cured film has flexibility and also excellent elasticity while having excellent gas barrier properties and hot water treatment resistance as a film, and therefore the gas barrier properties hardly deteriorate.

As the water-soluble polymer, a polyvinyl alcohol resin or an ethylene-vinyl alcohol copolymer can be used alone. Alternatively, a polyvinyl alcohol resin and an ethylene-vinyl alcohol copolymer can be used in combination. In the covering layer according to the present embodiment, a polyvinyl alcohol resin is preferable.

As the polyvinyl alcohol resin, generally, those obtained by saponification of polyvinyl acetate can be used. The polyvinyl alcohol resin may be a partially saponified polyvinyl alcohol resin with several tens of percent of acetate groups remaining, a completely saponified polyvinyl alcohol with no acetate groups remaining, or a modified polyvinyl alcohol resin with modified OH-groups. The polyvinyl alcohol resin is required to have a saponification degree of at least allowing crystallization that improves the hardness of the gas barrier coating film, and the saponification degree is preferably 70% or more. The polyvinyl alcohol resin with the polymerization degree within a range (about 100 to 5,000) that is used in a conventional sol-gel method can be used. Examples of such a polyvinyl alcohol resin include an RS resin "RS-110 (saponification degree: 99%, polymerization degree: 1,000) manufactured by Kuraray Co., Ltd., "Gohsenol NM-14 (saponification degree: 99%, polymerization degree: 1,400)" manufactured by The Nippon Synthetic Chemical Industry Co., Ltd., and the like.

As the ethylene-vinyl alcohol copolymer, a saponification product of a copolymer of ethylene and vinyl acetate, that is, a product obtained by saponifying an ethylene-vinyl acetate random copolymer can be used. For example, the saponification products include from a partially saponified product with several tens of mol percent of acetate groups remaining to a completely saponified product with several mol percent of acetate groups or no acetate groups remaining, and are not particularly limited. However, from the viewpoint of the barrier properties, the lower limit of the saponification degree is preferably 80% or more, more preferably 90% or more, and further preferably 95% or more. The upper limit is 100% or less.

The sol-gel method catalyst is suitably an acid or amine compound.

As the acid, for example, mineral acids such as sulfuric acid, hydrochloric acid, and nitric acid and organic acids such as acetic acid and tartaric acid can be used.

The content of the acid is preferably 0.001 to 0.05 mol%, more preferably 0.01 to 0.03 mol%, based on the total molar amount of the alkoxy group of the metal alkoxide. The lower limit of the content of the acid is preferably 0.001 mol% or more, and more preferably 0.01 mol% or more, based on the total molar amount of alkoxy groups in the metal alkoxide. The upper limit of the content of the acid is preferably 0.05 mol% or less, and more preferably 0.03 mol% or less, based on the total molar amount of alkoxy groups in the metal alkoxide. If the content is less than 0.001 mol%, the catalytic effect is too small. If the content is more than 0.05 mol%, the catalytic effect is too strong, and the reaction rate becomes too fast, which may make the reaction uneven.

As the amine compound, a tertiary amine that is substantially insoluble in water and soluble in an organic solvent is suitable. Specifically, for example, N,N-dimethylbenzylamine, tripropylamine, tributylamine, and tripentylamine can be used. In particular, N,N-dimethylbenzylamine is suitable.

The content of the amine-based compound is, for example, preferably 0.01 to 1.0 parts by mass, particularly preferably 0.03 to 0.3 parts by mass, based on 100 parts by mass of the metal alkoxide. The lower limit of the content of the amine-based compound is, for example, 0.01 part by mass or more, and particularly preferably 0.03 parts by mass or more, based on 100 parts by mass of the metal alkoxide. The upper limit of the content of the amine-based compound is, for example, 1.0 part by mass or less, and particularly preferably 0.3 parts by mass or less, based on 100 parts by mass of the metal alkoxide. If the content is less than 0.01 part by mass, the catalytic effect is too small, and if the content is greater than 1.0 part by mass, the catalytic effect is too strong, and the reaction rate becomes too fast, which may make the reaction uneven.

As the solvent, water and alcohols such as methyl alcohol, ethyl alcohol, n-propyl alcohol, isopropanol, and n-butanol can be preferably used.

The barrier covering layer formed as mentioned above has a thickness of 100 to 500 nm, and preferably 200 to 400 nm. The barrier covering layer formed as mentioned above has the lower limit of a thickness of 100 nm or more, and preferably 200 nm or more. The barrier covering layer formed as mentioned above has the upper limit of a thickness of 500 nm or less, and preferably 400 nm or less. This range is preferable, because the coat film is not broken and can sufficiently cover the deposition film surface.

As the composition of the barrier coating agent, when containing a silane coupling agent, the water-soluble polymer such as a polyvinyl alcohol resin and the silane coupling agent can be used in ranges of 5 to 10 parts by mass and 1 to 10 parts by mass, respectively, based on 100 parts by mass of the alkoxysilane. Consequently, the flexibility of the film can be maintained. In the above, it is not preferable to use the silane coupling agent in an amount exceeding 20 parts by mass, because the rigidity and brittleness of the formed barrier coating film are increased.

When a silane coupling agent is not contained, the barrier properties can be improved by adjusting the amount of the water-soluble polymer such as a polyvinyl alcohol resin to 10 to 20 parts by mass based on 100 parts by mass of the alkoxysilane to decrease the quantity ratio of the metal alkoxide.

The lower limit of the ratio of the mass of the metal alkoxide such as tetraethoxysilane, $SiO_2$ equivalent, to the mass of the water-soluble resin such as polyvinyl alcohol in the covering layer is preferably 1.6 or more, and more preferably 1.9 or more. The upper limit is preferably 4.5 or less, and more preferably 3.5 or less. The ratio of more than 4.5 is not preferred because the barrier properties may deteriorate in subsequent processes, and the ratio of less than 1.6 is not preferred because the barrier properties after the retort treatment deteriorate.

The ratio of silicon atoms to carbon atoms (Si/C) of the covering layer is preferably 0.85 or more and 1.70 or less, more preferably 0.90 or more and 1.70 or less, still more preferably 1.30 or more and 1.70 or less, and particularly preferably 1.30 or more and 1.55 or less. The lower limit of the ratio of silicon atoms to carbon atoms (Si/C) of the covering layer is preferably 0.85 or more, more preferably 0.90 or more, and still more preferably 1.30 or more. The upper limit of the ratio of silicon atoms to carbon atoms (Si/C) of the covering layer is preferably 1.70 or less, and more preferably 1.55 or less. It is not preferred that the ratio exceeds 1.70 because the barrier properties may deteriorate in subsequent processes and the like, and it is not preferred that the ratio is less than 0.85 since the barrier properties after the heat sterilization treatment deteriorate. The ratio of silicon atoms to carbon atoms of the covering layer can be measured by X-ray photoelectron spectroscopy (XPS), specifically under the conditions mentioned in Examples.

(Film-Forming Apparatus)

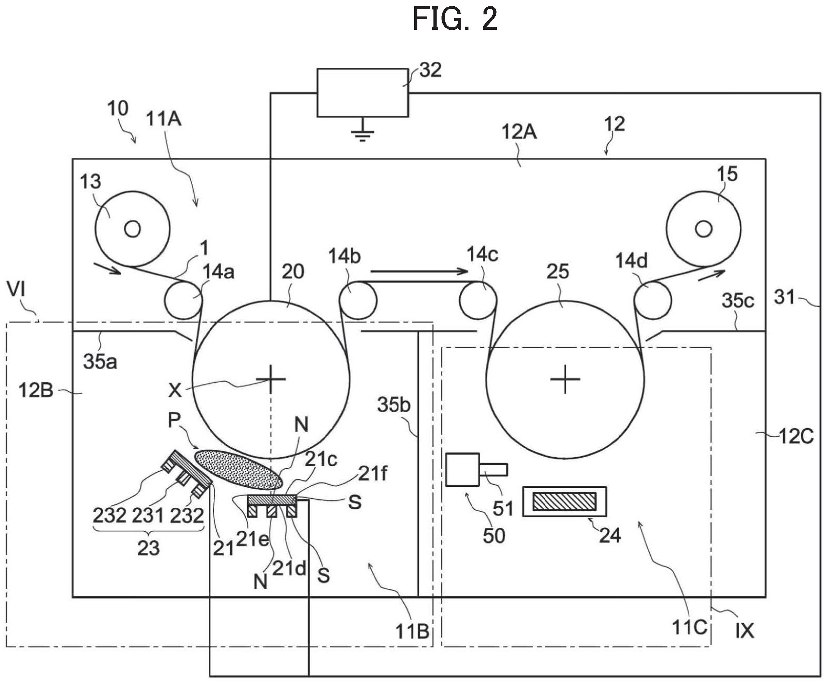

An example of the film-forming apparatus 10 that is used in the method for producing the barrier film will be described below. The film-forming apparatus 10 includes, as shown in FIG. 2, a base material-transporting mechanism 11A for transporting a base material 1, a plasma pretreatment mechanism 11B for performing plasma pretreatment of the surface of the base material 1, and a film-forming mechanism 11C for forming a deposition film 2. In the example shown in FIG. 2, the film-forming apparatus 10 further includes a decompression chamber 12. The decompression chamber 12 has a pressure-reducing mechanism for adjusting the atmosphere in at least a part of the internal space of the decompression chamber 12, such as a vacuum pump mentioned later, to the atmospheric pressure or less.

In the example shown in FIG. 2, the decompression chamber 12 includes a base material transport room 12A in which the base material-transporting mechanism 11A is located, a plasma pretreatment room 12B in which the plasma pretreatment mechanism 11B is located, and a film-forming room 12C in which the film-forming mechanism 11C is located. The decompression chamber 12 is preferably configured to prevent the atmosphere inside each of the rooms from mixing with each other. For example, as shown in FIG. 2, the decompression chamber 12 may include partition walls 35a to 35c separating each room between the base material transport room 12A and the plasma pretreatment room 12B, between the plasma pretreatment room 12B and the film-forming room 12C, and between the base material transport room 12A and the film-forming room 12C.

The base material transport room 12A, the plasma pretreatment room 12B, and the film-forming room 12C will be described. The plasma pretreatment room 12B and the film-forming room 12C are each disposed so as to be in contact with the base material transport room 12A and each have a portion being connected to the base material transport room 12A. Consequently, a base material 1 can be transported between the base material transport room 12A and the plasma pretreatment room 12B and between the base material transport room 12A and the film-forming room 12C without being exposed to the atmosphere. For example, the base material 1 can be transported between the base material transport room 12A and the plasma pretreatment room 12B through an opening provided in the partition wall 35a. The structure between the base material transport room 12A and the film-forming room 12C is the same, and the base material 1 can be transported between the base material transport room 12A and the film-forming room 12C.

The function of the pressure-reducing mechanism of the decompression chamber 12 will be described. The pressure-reducing mechanism of the decompression chamber 12 is configured such that the atmosphere of the space where at least the plasma pretreatment mechanism 11B or the film-forming mechanism 11C of the film-forming apparatus 10 is arranged can be reduced to the atmospheric pressure or less. The pressure-reducing mechanism may be configured such that the pressures in the base material transport room 12A, the plasma pretreatment room 12B, and the film-forming room 12C partitioned by the partition walls 35a to 35c can be each reduced to the atmospheric pressure or less.

The configuration of the pressure-reducing mechanism of the decompression chamber 12 will be described. The decompression chamber 12 may include, for example, a vacuum pump that is connected to the plasma pretreatment room 12B. The pressure in the plasma pretreatment room 12B when the plasma treatment mentioned later is performed can be appropriately controlled by adjusting the vacuum pump. The plasma supplied in the plasma pretreatment room 12B can be suppressed from diffusing to another room by a method mentioned later. The pressure-reducing mechanism of the decompression chamber 12 may have a vacuum pump connected to the film-forming room 12C, similar to the vacuum pump connected to the plasma pretreatment room 12B. As the vacuum pump, a dry pump, a turbomolecular pump, a cryopump, a rotary pump, a diffusion pump, or the like can be used.

The base material-transporting mechanism 11A of the base material 1 of the film-forming apparatus 10 according to the present embodiment will be described together with the transport route of the base material 1. The base material-transporting mechanism 11A is a mechanism for transporting the base material 1 and is arranged in the base material transport room 12A. In the example shown in FIG. 2, the base material-transporting mechanism 11A includes an unwinding roller 13 attached with the rolled original material of the base material 1, a winding roller 15 for winding the base material 1, and guide rolls 14a to 14d. The base material 1 sent from the base material-transporting mechanism 11A is then transported by a pretreatment roller 20 mentioned later disposed in the plasma pretreatment room 12B and a film-forming roller 25 mentioned later disposed in the film-forming room 12C.

The base material-transporting mechanism 11A may further include a tension pick-up roller (not shown). The base material-transporting mechanism 11A having a tension pick-up roller can transport the base material 1 while adjusting the tension applied to the base material 1.

(Plasma Pretreatment Mechanism)

The plasma pretreatment mechanism 11B will be described. The plasma pretreatment mechanism 11B is a mechanism for performing plasma pretreatment of the surface of the base material 1. The plasma pretreatment mechanism 11B shown in FIG. 2 generates plasma P and performing plasma pretreatment of the surface of the base material 1 using the generated plasma P. When the surface of the base material 1 is activated by the plasma pretreatment, for example, hydrogen is released from the base material resin component to generate carbon radicals. Subsequently, the carbon radicals bind to oxygen and hydrogen in the atmosphere to generate a functional group such as a hydroxyl group, a carboxyl group, and a ketone group. It is considered that the adhesion between the base material 1 and the deposition film 2 is improved by generating such a functional group. The plasma pretreatment mechanism 11B shown in FIG. 2 includes a pretreatment roller 20 disposed in the plasma pretreatment room 12B, an electrode section 21 facing the pretreatment roller 20, and a magnetic field-forming section 23 forming a magnetic field between the pretreatment roller 20 and the electrode section 21.

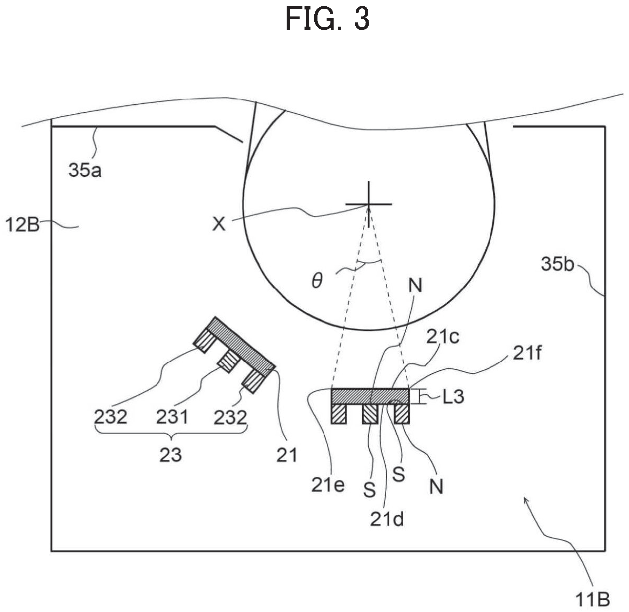

The pretreatment roller 20 will be described. FIG. 3 is an enlarged view of the part enclosed by the dashed line marked with the symbol VI in FIG. 2. In FIG. 3, a power supply wiring 31 connecting a power source 32 and an electrode section 21 mentioned later and plasma P generated by the plasma pretreatment mechanism 11B, which are shown in FIG. 2, are omitted from the drawing. The pretreatment roller 20 has a rotation axis X. The pretreatment roller 20 is disposed such that at least the rotation axis X is located in the plasma pretreatment room 12B partitioned by the partition walls 35a and 35b. The base material 1 having a dimension in the direction of the rotation axis X is wound on the pretreatment roller 20. In the following description, the dimension of the base material 1 in the direction of the rotation axis X is also referred to as the width of the base material 1. The direction of the rotation axis X is also referred to as the width direction of the base material 1.

As shown in FIG. 2, the pretreatment roller 20 may be disposed such that a part of the pretreatment roller 20 is exposed to the base material transport room 12A side. In the example shown in FIG. 2, the plasma pretreatment room 12B and the base material transport room 12A are connected to each other through an opening disposed in the partition wall 35a, and a part of the pretreatment roller 20 is exposed to the base material transport room 12A side through the opening. There is a gap between the partition wall 35a, which is disposed between the base material transport room 12A and the plasma pretreatment room 12B, and the pretreatment roller 20, and the base material 1 can be transported from the base material transport room 12A to the plasma pretreatment room 12B through the gap. The pretreatment roller 20 may be disposed such that the entirety thereof is located in the plasma pretreatment room 12B (not shown).

The pretreatment roller 20 may include a temperature-adjusting mechanism (not shown) for adjusting the temperature of the surface of the pretreatment roller 20. For example, the pretreatment roller 20 may include a temperature-adjusting mechanism that includes piping for circulating a temperature regulation medium, such as a refrigerant and a heat transfer medium, inside the pretreatment roller 20. The temperature-adjusting mechanism controls the temperature of the surface of the pretreatment roller 20 to a target temperature, for example, within a range of -20°C or higher and 100°C or lower.

When the pretreatment roller 20 includes a temperature-adjusting mechanism, it is possible to suppress shrinkage and breakage of the base material 1 due to heat at the time of plasma pretreatment.

The pretreatment roller 20 is formed of a material containing at least one of stainless steel, iron, copper, and chromium. The surface of the pretreatment roller 20 may be subjected to hard chromium plating treatment or the like for scratch prevention. These materials are easy to process. Since the thermal conductivity of the pretreatment roller 20 itself is increased by using the above-mentioned materials as the material for the pretreatment roller 20, the control of the temperature of the pretreatment roller 20 becomes easier.

The electrode section 21 will be described. In the example shown in FIG. 2 and FIG. 3, the electrode section 21 includes a first surface 21c facing the pretreatment roller 20 and a second surface 21d being located opposite to the first surface 21c. In the examples shown in FIG. 2 and FIG. 3, the electrode section 21 is a plate-shaped member, and the first surface 21c and the second surface 21d are both flat. Plasma is generated between the electrode section 21 and the pretreatment roller 20 by applying an AC voltage between the electrode section 21 and the pretreatment roller 20. The electrode section 21 forms an electric field preferably such that the plasma generated between the electrode section 21 and the pretreatment roller 20 travels in a direction perpendicular to the surface of the base material 1 toward the surface of the base material 1. Consequently, the base material 1 can be efficiently pretreated.

The number of the electrode section 21 is preferably two or more. Two or more electrode sections 21 are preferably aligned along the transport direction of the base material 1. The example shown in FIG. 2 and FIG. 3 is an example of a film-forming apparatus 10 having two electrode sections 21. The number of the electrode sections 21 is, for example, 12 or less.

The effect of alignment of two or more electrode sections 21 along the transport direction of the base material 1 will be described. As mentioned above, plasma is generated between the electrode section 21 and the pretreatment roller 20. The region where plasma is generated is enlarged with an increase in the dimension of the electrode section 21 in the transport direction. However, when the electrode section 21 is a flat plate-shaped member, the distance from the end of the first surface 21c of the electrode section 21 facing the pretreatment roller 20 in the transport direction to the pretreatment roller 20 increases with an increase in the dimension of the electrode section 21 in the transport direction, and the treatment performance of plasma deteriorates.

In the film-forming apparatus 10, two or more electrode sections 21 are aligned along the transport direction of the base material 1. Consequently, even if the dimension of the electrode section 21 in the transport direction of the base material 1 is small, it is possible to generate plasma over a broad range in the transport direction. The distance from the end of the first surface 21c of the electrode section 21 in the transport direction to the pretreatment roller 20 can be reduced by reducing the dimension of the electrode section 21, and plasma can be generated uniformly in the transport direction.

As shown in FIG. 2 and FIG. 3, the electrode section 21 includes a first end 21e and a second end 21f located on the first surface 21c of the electrode section 21. The first end 21e is the upstream end of the base material 1 in the transport direction, and the second end 21f is the downstream end of the base material 1 in the transport direction. As mentioned above, the distances from the first end 21e and the second end 21f of the electrode section 21 in the transport direction to the pretreatment roller 20 can be reduced by reducing the dimension of the electrode section 21 in the transport direction of the base material 1. The dimension of the electrode section 21 in the transport direction of the base material 1 corresponds to the angle $\theta$ shown in FIG. 3. The angle $\theta$ is an angle formed by a straight line passing through the first end 21e and the rotation axis X and a straight line passing through the second end 21f and the rotation axis X. The angle $\theta$ is preferably 20° or more and 90° or less, more preferably 60° or less, and still more preferably 45° or less. Within the above range of the angle $\theta$, when the first surface 21c of the electrode section 21 is flat, plasma can be generated uniformly in the transport direction between the electrode section 21 and the pretreatment roller 20.

The material of the electrode section 21 is not particularly limited as long as it has conductivity. Specifically, aluminum, copper, and stainless steel can be suitably used as the material of the electrode section 21.

The thickness L3 of the electrode section 21 viewed in a direction perpendicular to the first surface 21c of the electrode section 21 is not particularly limited, but is, for example, 15 mm or less. When the thickness of the electrode section 21 is the above value, a magnetic field can be effectively formed between the pretreatment roller 20 and the electrode section 21 by the magnetic field-forming section 23. The thickness L3 of the electrode section 21 is, for example, 3 mm or more.

The magnetic field-forming section 23 will be described. As shown in FIG. 2 and FIG. 3, the magnetic field-forming section 23 is disposed on the electrode section 21 on the side opposite to the side facing the pretreatment roller 20. The magnetic field-forming section 23 is a member for forming a magnetic field between the pretreatment roller 20 and the electrode section 21. The magnetic field between the pretreatment roller 20 and the electrode section 21 contributes to, for example, the generation of plasma with a higher density when plasma is generated using the plasma pretreatment mechanism 11B. The magnetic field-forming section 23 shown in FIG. 2 and FIG. 3 includes a first magnet 231 and a second magnet 232 on the second surface 21d of the electrode section 21.

The number of the magnetic field-forming section 23 is preferably two or more. When the plasma pretreatment mechanism 11B includes two or more electrode sections 21 and two or more magnetic field-forming sections 23, the two or more magnetic field-forming sections 23 are each preferably disposed on the side opposite to the side facing the pretreatment roller 20. In the example shown in FIG. 2 and FIG. 3, two magnetic field-forming sections 23 are disposed on the second surfaces 21d of two electrode sections 21, respectively.

The structure of the first magnet 231 and the second magnet 232 in a normal direction of the second surface 21d of the electrode section 21 will be described. As shown in FIG. 2 and FIG. 3, the first magnet 231 and the second magnet 232 each have an N pole and an S pole. The symbol N shown in FIG. 2 and FIG. 3 indicates the N pole of the first magnet 231 or second magnet 232. The symbol S shown in FIG. 2 and FIG. 3 indicates the S pole of the first magnet 231 or second magnet 232. One of the N pole or the S pole of the first magnet 231 is located closer to the base material 1 than the other. The N pole and the S pole of the second magnet 232 are located in reverse relation with those in the first magnet 231 with respect to the base material 1. In the example shown in FIG. 2 and FIG. 3, the N pole of the first magnet 231 is located closer to the base material 1 than the S pole of the first magnet 231, and the S pole of the second magnet 232 is located closer to the base material 1 than the N pole of the second magnet. The S pole of the first magnet 231 may be located closer to the base material 1 than the N pole of the first magnet 231, and the N pole of the second magnet 232 may be located closer to the base material 1 than the S pole of the second magnet 232 (not shown).

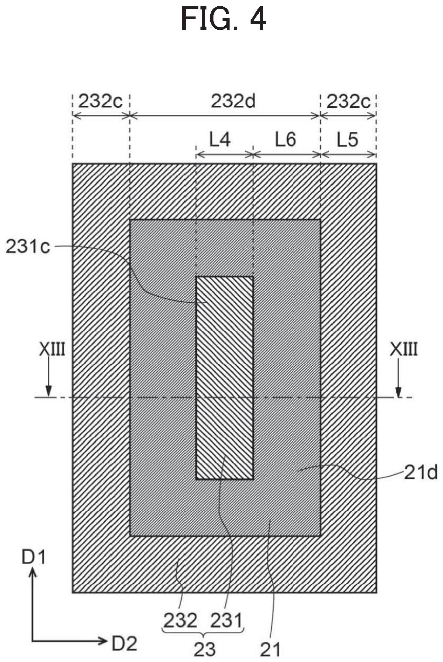

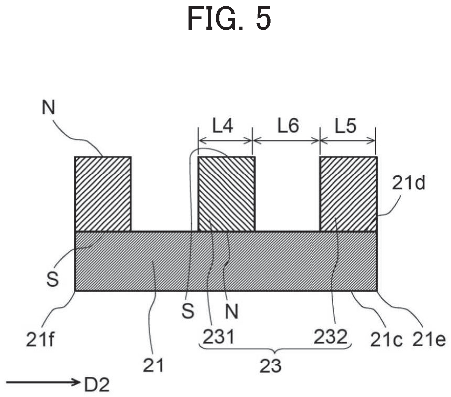

Then, the structure of the first magnet 231 and the second magnet 232 in the surface direction of the second surface 21d of the electrode section 21 will be described. FIG. 4 is a plan view of the electrode section 21 and the magnetic field-forming section 23 shown in FIG. 2 viewed from the magnetic field-forming section 23 side. FIG. 5 is a cross-sectional view illustrating a cross-section along the line VIII-VIII in FIG. 4. In FIG. 4, the direction D1 is a direction in which the rotation axis X of the pretreatment roller 20 extends.

As shown in FIG. 4 and FIG. 5, the first magnet 231 includes a first axis direction portion 231c. As shown in FIG. 4, the first axis direction portion 231c extends along the direction D1, i.e., along the rotation axis X of the pretreatment roller 20. The first magnet 231 disposed in one electrode section 21 may include one first axis direction portion 231c or may include two or more first axis direction portions 231c. In the example shown in FIG. 4, the first magnet 231 disposed in one electrode section 21 includes one first axis direction portion 231c.

As shown in FIG. 4 and FIG. 5, the second magnet 232 includes a second axis direction portion 232c. As shown in FIG. 4, the second axis direction portion 232c also extends, similar to the first axis direction portion 231c, along the direction D1, i.e., along the rotation axis X.

The first magnet 231 and the second magnet 232 both include portions extending along the rotation axis X, and thereby it is possible to enhance the homogeneity in the intensity of the magnetic field formed in the circumference of the base material 1 in the width direction of the base material 1. Consequently, it is possible to enhance the homogeneity in the distribution density of plasma formed in the circumference of the base material 1 in the width direction of the base material 1.

The second magnet 232 disposed in one electrode section 21 may include one second axis direction portion 232c or may include two or more second axis direction portions 232c. In the example shown in FIG. 4 and FIG. 5, the second magnet 232 disposed in one electrode section 21 includes two second axis direction portions 232c. Two second axis direction portions 232c may be located so as to sandwich the first axis direction portion 231c in a direction D2 orthogonal to the rotation axis X in the surface direction of the second surface 21d of the electrode section 21.

The dimension L4 of the first axis direction portion 231c and the dimension L5 of the second axis direction portion 232c in the transport direction of the base material 1 shown in FIG. 5 are not particularly limited. The ratio of the dimension L4 of the first axis direction portion 231c and the dimension L5 of the second axis direction portion 232c in the transport direction of the base material 1 is not particularly limited. The dimension L4 of the first axis direction portion 231c and the dimension L5 of the second axis direction portion 232c may be the same. Alternatively, the dimension L4 of the first axis direction portion 231c may be larger than the dimension L5 of the second axis direction portion 232c.

The distance L6 between the first axis direction portion 231c and the second axis direction portion 232c in the direction D2 is set such that the magnetic field formed by the first axis direction portion 231c and the second axis direction portion 232c is formed between the pretreatment roller 20 and the electrode section 21.

The second magnet 232 may surround the first magnet 231 when the magnetic field-forming section 23 is viewed along the normal direction of second surface 21d of the electrode section 21. For example, as shown in FIG. 4, the second magnet 232 may include two second axis direction portions 232c and also two connection portions 232d disposed so as to connect the two second axis direction portions 232c.

Examples of the type of the magnet that is used as the magnetic field-forming section 23, such as the first magnet 231 and the second magnet 232, include a ferrite magnet and a permanent magnet of a rare-earth magnet such as neodymium and samarium cobalt (Samacoba). As the magnetic field-forming section 23, an electromagnet can also be used.

The magnetic flux density of the magnet of the magnetic field-forming section 23 such as the first magnet 231 and the second magnet 232 is, for example, 100 Gauss or more and 10,000 Gauss or less. The lower limit of the magnetic flux density of the magnets of the magnetic field-forming section 23 such as the first magnet 231 and the second magnet 232 is, for example, 100 Gauss or more. The upper limit of the magnetic flux density of the magnets of the magnetic field-forming section 23 such as the first magnet 231 and the second magnet 232 is, for example, 10,000 Gauss or less. If the magnetic flux density is 100 Gauss or more, a sufficiently strong magnetic field is formed between the pretreatment roller 20 and the electrode section 21, and thereby sufficiently high-density plasma can be generated, and a good pretreated surface can be formed quickly. In order to increase the magnetic flux density of the surface of the base material 1 to greater than 10,000 Gauss, an expensive magnet or magnetic field-generating mechanism is needed.

The plasma pretreatment mechanism 11B may include a plasma source gas supply part (not shown). The plasma source gas supply part supplies a gas that becomes a raw material of plasma into the plasma pretreatment room 12B. The structure of the plasma source gas supply part is not particularly limited. For example, the plasma source gas supply part is disposed on the wall surface of the plasma pretreatment room 12B and includes a hole from which a gas that is the raw material for plasma is ejected. The plasma source gas supply part may have a nozzle that emits a plasma source gas at a position near the base material 1 than the wall surface of the plasma pretreatment room 12B. Examples of the plasma source gas supplied by the plasma source gas supply part include an inert gas such as argon, an active gas such as oxygen, nitrogen, a carbonic acid gas, and ethylene, and a gas mixture thereof. As the plasma source gas, one of inert gases may be used alone, one of active gases may be used alone, or a gas mixture of two or more inert gases or active gases may be used. As the plasma source gas, it is preferable to use a gas mixture of an inert gas such as argon and an active gas. As an example, the plasma source gas supply part supplies a gas mixture of argon (Ar) and oxygen ($O_2$).

The plasma pretreatment mechanism 11B supplies, for example, plasma with a plasma density of 100 W·sec/m$^2$ or more and 8,000 W·sec/m$^2$ or less between the pretreatment roller 20 and the electrode section 21.

In the example shown in FIG. 2, the plasma pretreatment mechanism 11B is arranged in the plasma pretreatment room 12B that is separated from the base material transport room 12A and the film-forming room 12C by partition walls. The atmosphere of the plasma pretreatment room 12B is easily independently adjusted by partitioning the plasma pretreatment room 12B from other regions such as the base material transport room 12A and the film-forming room 12C.

Consequently, for example, the plasma source gas concentration in the space where the pretreatment roller 20 and the electrode section 21 face each other can be easily controlled, and the productivity of the laminated film is improved.

(Film-Forming Mechanism)

Then, the film-forming mechanism 11C will be described. In the example shown in FIG. 2, the film-forming mechanism 11C includes a film-forming roller 25 disposed in the film-forming room 12C and an evaporation mechanism 24.

The film-forming roller 25 will be described. The film-forming roller 25 is a roller for winding and transporting the base material 1 pretreated in the plasma pretreatment mechanism 11B with the treated surface of the base material 1 facing outwards.

The material for the film-forming roller 25 will be described. The film-forming roller 25 is preferably formed of a material containing at least one of stainless steel, iron, copper, and chromium. The surface of the film-forming roller 25 may be subjected to hard chromium plating treatment or the like for scratch prevention. These materials are easy to process. Since the thermal conductivity of the film-forming roller 25 itself is increased by using the above materials as the material for the film-forming roller 25, the temperature controlling property is improved when temperature control is performed. The average surface roughness Ra of the surface of the film-forming roller 25 is, for example, 0.1 μm or more and 10 μm or less.

The film-forming roller 25 may include a temperature-adjusting mechanism (not shown) for adjusting the temperature of the surface of the film-forming roller 25. The temperature-adjusting mechanism includes, for example, a circulation passage for circulating a cooling medium or a heat source medium in the inside of the film-forming roller 25. The cooling medium (coolant) is, for example, ethylene glycol aqueous solution, and the heat source medium (heat medium) is, for example, silicon oil. The temperature-adjusting mechanism may include a heater installed at a position facing the film-forming roller 25. When the film-forming mechanism 11C forms a film by a vapor deposition method, considering the limitations in heat resistance of related mechanical parts and versatility, the temperature-adjusting mechanism preferably controls the temperature of the surface of the film-forming roller 25 to a target temperature within a range of -20°C or higher and 200°C or lower. When the film-forming roller 25 has a temperature-adjusting mechanism, it is possible to suppress a variation in the temperature of the base material 1 due to the heat that is generated at the time of film formation.

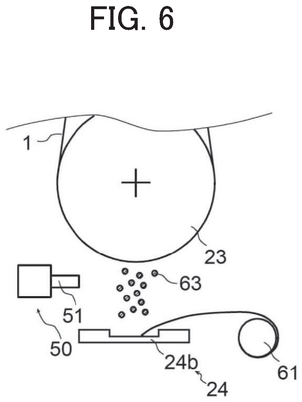

The evaporation mechanism 24 will be described. FIG. 6 is a view illustrating a specific form of the evaporation mechanism 24 in which the part enclosed by the dashed line marked with the symbol IX in FIG. 2 is enlarged and is omitted in FIG. 5 and illustrating a vapor deposition material supply section 61 for supplying a vapor deposition material omitted in FIG. 2. In FIG. 6, the decompression chamber 12 and the partition walls 35b, 35c are omitted from the drawing. The evaporation mechanism 24 is a mechanism for evaporating the vapor deposition material containing aluminum. The evaporated vapor deposition material adheres to the base material 1, and thereby a deposition film containing aluminum is formed on the surface of the base material 1. The evaporation mechanism 24 in the present embodiment adopts a resistance heating system. In the example shown in FIG. 6, the evaporation mechanism 24 includes a boat 24b. In the present embodiment, the boat 24b includes a power source (not shown) and a resistive element (not shown) electrically connected to the power source. A plurality of the boats 24b may be aligned in the width direction of the base material 1.

As shown in FIG. 6, the film-forming mechanism 11C may include a vapor deposition material supply section 61 that supplies a vapor deposition material to the evaporation mechanism 24. FIG. 6 shows an example in which the vapor deposition material supply section 61 continuously sends aluminum metal wire.

The film-forming mechanism 11C has a gas supply mechanism (not shown). The gas supply mechanism is a mechanism for supplying a gas between the evaporation mechanism 24 and the film-forming roller 25. The gas supply mechanism at least supplies an oxygen gas. The oxygen gas reacts or binds to an evaporation material, such as aluminum, that is evaporated from the evaporation mechanism 24 and goes towards the base material 1 on the film-forming roller 25. Consequently, a deposition film containing aluminum oxide can be formed on the surface of the base material 1.

Although not essential to the present invention, the film-forming mechanism 11C may include a plasma supply mechanism 50 that supplies plasma between the surface of the base material 1 and the evaporation mechanism 24. In the example shown in Figs. 2 and 6, the plasma supply mechanism 50 includes a hollow cathode 51. In the present embodiment, the hollow cathode 51 is a negative electrode having a partially opened cavity. The hollow cathode 51 can generate plasma in the cavity. In the example shown in FIG. 6, the hollow cathode 51 is disposed such that the opening of the cavity of the hollow cathode 51 is located diagonally above the boat 24b. The plasma supply mechanism 50 according to the present embodiment includes an anode (not shown) that faces the opening of the cavity of the hollow cathode 51 and extracts plasma from the opening. Strong plasma can be generated between the surface of the base material 1 and the evaporation mechanism 24 by generating plasma in the cavity of the hollow cathode 51 by the plasma supply mechanism 50 according to the present embodiment and extracting the plasma between the surface of the base material 1 and the evaporation mechanism 24 by the anode facing the plasma. The position of the facing anode is not particularly limited as long as plasma can be extracted from the opening of the cavity of the hollow cathode 51 by the facing anode and can be supplied between the surface of the base material 1 and the evaporation mechanism 24. In the present embodiment, a case in which facing anodes are arranged on both sides of the boat 24b in the width direction of the base material 1 will be described. In this case, the film-forming mechanism 11C includes a plurality of boats 24b and a plurality of facing anodes, and the boats 24b and the facing anodes may be alternately aligned in the width direction of the base material 1. The plasma supply mechanism 50 may include a raw material supply device (not shown) that at least supplies a plasma source gas into the cavity of the hollow cathode 51. As the plasma source gas supplied by the raw material supply device, for example, gases that can be used as the plasma source gas that is supplied by the plasma source gas supply part of the plasma pretreatment mechanism 11B can be similarly used.

The plasma supply mechanism 50 can activate aluminum evaporated in the evaporation mechanism 24 and an oxygen gas and accelerate the reaction or binding between aluminum and oxygen gas by performing plasma assistance at the time of vapor deposition for supplying plasma between the surface of the base material 1 and the evaporation mechanism 24. Consequently, the ratio of aluminum present as aluminum oxide in the deposition film 2 formed on the surface of the base material 1 can be increased, and the characteristics of the deposition film 2 can be stabilized.

The film-forming apparatus 10 may include a base material charge removing section (not shown) that is located downstream from the film-forming room 12C in the transport direction of the base material 1 in the base material transport room 12A and performs posttreatment for removing the charge generated in the base material 1 due to the film formation by the film-forming mechanism 11C. The base material charge removing section may be provided to remove the charge on one surface of the base material 1 or may be provided to remove the charge on both surfaces of the base material 1.

The device that is used as the base material charge removing section performing posttreatment of the base material 1 is not particularly limited, but, for example, a plasma discharge device, an electron beam irradiation device, an ultraviolet irradiation device, a static elimination bar, a glow discharge device, or a corona treatment device can be used.

When the posttreatment is performed by discharge formation with a plasma treatment device or a glow discharge device, the posttreatment can be performed by using any discharge system, such as alternating current (AC) plasma, direct current (DC) plasma, arc discharge, microwave, or surface wave plasma, by supplying a single discharge gas such as argon, oxygen, nitrogen, and helium or a gas mixture thereof to near the base material 1. In a reduced pressure environment, it is most preferable to perform posttreatment using a plasma discharge device.

The base material 1 can be quickly separated from the film-forming roller 25 at a predetermined position and transported by installing the base material charge removing section at a position downstream from the film-forming room 12C in the transport direction of the base material 1 in the base material transport room 12A and removing the charge of the base material 1. Consequently, base material transportation can be stabilized, breakage or a decrease in quality of the base material 1 due to charging are prevented, and post-processing suitability can be improved by improved wettability on both base material surfaces.

(Power Source)

In the example shown in FIG. 2, the film-forming apparatus 10 further includes a power source 32 electrically connected to the pretreatment roller 20 and the electrode section 21. In the example shown in FIG. 5, the power source 32 is electrically connected to the pretreatment roller 20 and the electrode section 21 through the power supply wiring 31. The power source 32 is, for example, an AC power source. When the power source 32 is an AC power source, the power source 32 can apply, for example, an AC voltage having a frequency of 20 kHz or more and 500 kHz or less between the pretreatment roller 20 and the electrode section 21. The input power that can be applied by the power source 32 (power that can be applied per 1 m width of the electrode section 21 in the width direction of the base material 1) is not particularly limited, but is, for example, 0.5 kW/m or more and 20 kW/m or less. The pretreatment roller 20 may be installed at an electrically ground level or may be installed at an electrically floating level.

(Method for Producing Barrier Film)

Then, a method for manufacturing the barrier film shown in FIG. 1 will be described using the above-described film-forming apparatus 10. First, a method for forming a deposition film 2 on the surface of the base material 1 will be described. In the formation of a film using the film-forming apparatus 10, a plasma pretreatment process of performing plasma pretreatment of the surface of the base material 1 by the plasma pretreatment mechanism 11B and a film-forming process of forming a deposition film on the surface of the base material 1 by the film-forming mechanism 11C are performed while transporting the base material 1 along the above-described transport route of the base material 1. The transport speed of the base material 1 is preferably 200 m/min or more, and more preferably 400 m/min or more and 1,000 m/min or less. The lower limit of the transport speed of the base material 1 is preferably 200 m/min or more, and more preferably 400 m/min or more. The upper limit of the transport speed of the base material 1 is more preferably 1,000 m/min or less.

(Plasma Pretreatment Process)

The plasma pretreatment process is performed by, for example, the following method. First, a plasma source gas is supplied into the plasma pretreatment room 12B. Then, the above-mentioned AC voltage is applied between the pretreatment roller 20 and the electrode section 21. When the AC voltage is applied, input power control or impedance control may be performed.

Oxygen alone or a gas mixture of an oxygen gas and an inert gas as the plasma source gas that is supplied in the pretreatment is supplied from a gas storing section through a flow rate controller while measuring the gas flow rate. Examples of the inert gas include one or a mixture of two or more selected from the group consisting of argon, helium, and nitrogen.

In the plasma treatment, the mixture ratio of an oxygen gas and the inert gas, oxygen gas/inert gas, is preferably 6/1 to 1/1, and more preferably 5/2 to 3/2.5.

The film-forming energy of the vapor deposited aluminum on a resin base material is increased by controlling the mixture ratio to 6/1 to 1/1, and the degree of oxidation of the aluminum oxide deposition film is increased to secure the adhesion between the aluminum oxide deposition film and the base material 1 by further controlling the mixture ratio to 5/2 to 3/2.

Glow discharge and plasma generation are simultaneously performed by application of an AC voltage, and the density of the plasma P between the pretreatment roller 20 and the magnetic field-forming section 23 is increased. Thus, plasma P can be supplied between the pretreatment roller 20 and the magnetic field-forming section 23. This plasma P can perform plasma pretreatment of the surface of the base material 1.

The plasma intensity per unit area in the plasma treatment is 50 $W \cdot sec/m^2$ or more and 8,000 $W \cdot sec/m^2$ or less. The lower limit of the plasma intensity per unit area in the plasma treatment is 50 $W \cdot sec/m^2$ or more. The upper limit of the plasma intensity per unit area in the plasma treatment is 8,000 $W \cdot sec/m^2$ or less. If the plasma intensity is less than 50 $W \cdot sec/m^2$, the effect of the plasma pretreatment is not observed, and if the plasma density is 8,000 $W \cdot sec/m^2$ or more, deterioration of the resin base material by the plasma, such as waste, breakage, coloring, or sintering of the resin base material, tends to occur. In particular, in order to obtain an aluminum oxide layer, the plasma intensity in the plasma pretreatment is preferably 100 $W \cdot sec/m^2$ or more and 1,000 $W \cdot sec/m^2$ or less. In particular, the lower limit of the plasma intensity in the plasma pretreatment to form an aluminum oxide layer is preferably 100 $W \cdot sec/m^2$ or more. In particular, the upper limit of the plasma intensity in the plasma pretreatment to form an aluminum oxide layer is preferably 1,000 $W \cdot sec/m^2$ or less.

The air pressure inside the plasma pretreatment room 12B when an AC voltage is applied between the pretreatment roller 20 and the electrode section 21 is reduced to the atmospheric pressure or less by the decompression chamber 12. In this case, the pressure in the plasma pretreatment room 12B is adjusted, for example, such that glow discharge can be generated between the pretreatment roller 20 and the electrode section 21 by the application of the AC voltage. The pressure in the plasma pretreatment room 12B when an AC voltage is applied between the pretreatment roller 20 and the electrode section 21 can be set and maintained to about 0.1 Pa or more and 100 Pa or less, and particularly preferably 1 Pa or more and 20 Pa or less.

The function of the magnetic field-forming section 23 in the plasma pretreatment process will be described. The magnetic field-forming section 23 forms a magnetic field between the pretreatment roller 20 and the electrode section 21. The magnetic field can function so as to capture and accelerate electrons present between the pretreatment roller 20 and the electrode section 21. Consequently, in the region where the magnetic field is formed, since it is possible to increase the collision frequency between electrons and plasma source gas, increase the plasma density, and localize plasma, the efficiency of plasma pretreatment can be improved.

(Film-Forming Process)

In the film-forming process, a film is formed on the surface of the base material 1 using the film-forming mechanism 11C. As an example of the film-forming process, a case of forming an aluminum oxide deposition film by using the film-forming mechanism 11C including the evaporation mechanism 24 shown in FIG. 6 will be described.

First, a vapor deposition material containing aluminum is supplied into the boat 24b of the evaporation mechanism 24 so as to face the film-forming roller 25. As the vapor deposition material, aluminum metal wire can be used. In the example shown in FIG. 6, a vapor deposition material is supplied to the boat 24b by continuously sending aluminum metal wire into the boat 24b by the vapor deposition material supply section 61. The thickness of the deposition film can be controlled by the speed at which the substrate is transported, the amount of aluminum metal wire supplied (thickness of the metal wire, feeding speed) and the like.

Aluminum is evaporated in the boat 24b by heating. FIG. 6 conveniently shows evaporated aluminum vapor 63. By controlling the amount of oxygen gas that oxidizes aluminum, it is possible to achieve both barrier properties and transparency, and further improve the Gelbo flex resistance. The pressure at this time is preferably 0.01 Pa or more and 3 Pa or less. The lower limit of the pressure at this time is preferably 0.01 Pa or more. The upper limit of the pressure at this time is preferably 3 Pa or less.

Furthermore, if necessary, a method of supplying plasma between the surface of the base material 1 and the evaporation mechanism 24 by the plasma supply mechanism 50, that is, the plasma assistance at the time of vapor deposition, will be described. In the present embodiment, plasma is generated in the cavity of the hollow cathode 51 of the plasma supply mechanism 50. Then, discharge is generated between the hollow cathode 51 and the facing anode, and plasma in the cavity of the hollow cathode 51 is extracted between the surface of the base material 1 and the evaporation mechanism 24.

In the present embodiment, the discharge to be generated between the hollow cathode 51 and the facing anode is arc discharge. The arc discharge means, for example, discharge with a current value of 10 A or more.

Plasma is supplied to the aluminum vapor 63 by evaporating aluminum while supplying plasma between the surface of the base material 1 and the evaporation mechanism 24. The supply of plasma can accelerate the reaction or binding between the aluminum vapor 63 and an oxygen gas. Consequently, before the aluminum vapor 63 arrives at the surface of the base material 1, the aluminum vapor 63 can be oxidized. The evaporated and oxidized aluminum adheres to the base material 1 and forms an aluminum oxide deposition film on the surface of the base material 1. Thus, the barrier film shown in FIG. 1 can be produced.

The plasma source gas that is supplied by the plasma supply mechanism 50 is preferably an argon gas.

In the present embodiment, before the film-forming process, a plasma pretreatment process for supplying plasma to the surface of the base material 1 is performed. In the plasma pretreatment process, an AC voltage is applied between the electrode section 21 and the pretreatment roller 20. A magnetic field is generated in a space between the electrode section 21 and the pretreatment roller 20 using the magnetic field-forming section 23 located on the surface of the electrode section 21 opposite to the surface facing the pretreatment roller 20. Consequently, plasma can be efficiently generated in the space between the electrode section 21 and the pretreatment roller 20, or plasma can be incident perpendicularly on the surface of the base material 1 wound on the pretreatment roller 20. Accordingly, the adhesion between the film formed by the film-forming process and the base material 1 can be enhanced.

(Aging Treatment after Film-Forming Process)

The wound body of the barrier film after the film-forming process is subjected to aging treatment (heat treatment) for a predetermined period of time. Consequently, introduction of hydroxyl groups into the aluminum oxide deposition film progresses, and a deposition film having excellent oxygen transmittance and water vapor transmittance can be formed.

The aging temperature is preferably 50°C or higher and 60°C or lower. The lower limit of the aging temperature is preferably 50°C or higher. The upper limit of the aging temperature is preferably 60°C or lower. The lower limit of the aging time is 24 hours (1 day) or more and more preferably 48 hours (2 days) or more. The upper limit is 144 hours (6 days) or less and more preferably 96 hours (4 days) or less. The aging humidity is not particularly limited, but may be ordinary relative humidity of 40% or more and 70% or less, and high humidity is not necessary.

(Covering Layer-Forming Process)

A covering layer 3 can be produced by the following method. First, a barrier coating agent is prepared by mixing the above-described metal alkoxide and a water-soluble polymer, and as needed a silane coupling agent, a sol-gel method catalyst, or an acid, and as a solvent, water or an organic solvent, for example, alcohol such as methyl alcohol, ethyl alcohol, and isopropanol. Then, the barrier coating agent is applied on an aluminum oxide deposition film and dried by usual methods. In this drying process, polycondensation of the metal alkoxide and silanol generated from the silane coupling agent further progresses to form a coating film. The drying conditions are heating treatment at a temperature range of 20°C to 200°C and not higher than the melting point of the plastic base material 1, and preferably 50°C to 180°C, for 3 seconds to 10 minutes. Consequently, a covering layer of the barrier coating agent can be formed on the aluminum oxide deposition film. The above application procedure may be repeated to further form a plurality of coating films composed of two or more layers on the first coating film.

The wound body of the barrier film after the covering layer-forming process is subjected to aging treatment (heat treatment) for a predetermined period of time. Consequently, condensation of the covering layer adequately progresses, and a barrier film with barrier properties after the retort test that are less likely to deteriorate can be obtained.

The lower limit of the aging temperature after the covering layer-forming process is preferably 40°C or higher, and more preferably 50°C or higher. The upper limit is preferably 100°C or lower, and more preferably 70°C or lower. The lower limit of aging time is 24 hours (1 day) or more, and more preferably 48 hours (2 days) or more. The upper limit is 144 hours (6 days) or less and more preferably 96 hours (4 days) or less. The aging humidity is not particularly limited, but may be ordinary relative humidity of 40% or more and 70% or less, and high humidity is not necessary.

(Film-Forming Process 2)

An aluminum oxide deposition film may be further formed on the covering layer. It is possible to form under the same conditions as in the above film-forming process and aging treatment.

(Covering Layer-Forming Process 2)

A covering layer may be further formed on the aluminum oxide deposition film formed through a film-forming process 2. It is possible to form under the same conditions as in the above covering layer-forming process.

(Laminate)

FIG. 7 is a cross-sectional view illustrating an example of the laminate including the barrier film of the present embodiment. This laminate 100 is a laminate using the barrier film 100A of FIG. 1. That is, the first polypropylene base material 110, the base layer 115, the deposition film 120, and the covering layer 130 having barrier properties constitute the barrier film 100A. One surface of the first polypropylene base material 110 side of the barrier film is laminated to the sealant layer 150 through a first adhesive layer 161, and the other surface of the covering layer 130 side of the barrier film is laminated to the second polypropylene base material 140 through an adhesive layer 162. That is, it has a three-layer film structure of second polypropylene base material 140/second adhesive layer 162/barrier film/first adhesive layer 161/sealant layer 150, with the barrier film as the intermediate layer. The structure other than the barrier film A will be described below.

[Adhesive Layer]

The surface of the first polypropylene base material 110 side of the barrier film is laminated to the sealant layer 150 through a first adhesive layer 161, and the surface of the covering layer 130 side of the barrier film is laminated to the second polypropylene base material 140 through an adhesive layer 162. This can improve the adhesion between the barrier film and the sealant layer, and the adhesion between the first polypropylene base material and the second base material, and suppress deterioration of barrier properties during heat sterilization treatments such as retorting and boiling.

The first adhesive layer 161 and the second adhesive layer 162 may be any of a 1-part curing adhesive, a 2-part curing adhesive, and a non-curing adhesive. The adhesive may be a solvent-free adhesive or a solvent-based adhesive suitable for dry lamination.

Examples of the solvent-free adhesives, i.e., non-solvent laminating adhesive, include a polyether-based adhesive, polyester-based adhesive, a silicone-based adhesive, an epoxy-based adhesive, and a urethane-based adhesive. Among them, the urethane-based adhesive is preferred, and the 2-part curing urethane-based adhesive is more preferred.

Examples of the solvent-based adhesive include a rubberbased adhesive, a vinyl-based adhesive, an olefin-based adhesive, a silicone-based adhesive, an epoxy-based adhesive, a phenol-based adhesive, and a urethane-based adhesive. Among them, the urethane-based adhesive is preferred, and the 2-part curing urethane adhesive is more preferred.

The thickness of the adhesive layer is, for example, 0.1 $\mu$m or more and 10 $\mu$m or less, preferably 0.2 $\mu$m or more and 8 $\mu$m or less, and more preferably 0.5 $\mu$m or more and 6 $\mu$m or less. The lower limit of the thickness of the adhesive layer is, for example, 0.1 $\mu$m or more, preferably 0.2 $\mu$m or more, and more preferably 0.5 $\mu$m or more. The upper limit of the thickness of the adhesive layer is, for example, 10 $\mu$m or less, preferably 8 $\mu$m or less, and more preferably 6 $\mu$m or less.

[Second Polypropylene Base Material]

The second polypropylene base material 140 is laminated to the surface of the covering layer 30 side of the barrier film through a second adhesive layer 162. Here, it is possible to use, as the second polypropylene base material, the same as that of the first polypropylene base material 110, and therefore, a description thereof will be omitted.

In the case of a three-layer structure as shown in FIG. 7, a printing layer (not shown) may be formed on the surface of the outermost layer of the second polypropylene base material 140, or may be formed on the surface of the second adhesive layer 162 side of the second polypropylene base material 140.

[Sealant Layer]

The sealant layer 150 contains a resin material which can be fused to each other by heat. Examples of the resin material which can be fused to each other by heat include polyolefins, and specific examples thereof include polyethylenes such as low-density polyethylene, linear low-density polyethylene, and medium-density polyethylene, polypropylenes, polybutenes, methylpentene polymers, and cyclic olefin copolymers.

The sealant layer is preferably made of polypropylene. As a result, the three-layer film is made entirely of the polypropylene, thus making it possible to achieve the packaging material that is a mono-material. After collecting used packaging material, there is no need to separate the base material and the sealant layer, which can improve the recyclability of the packaging material. When the sealant layer is made of polypropylene, the oil resistance can also be improved, resulting in a sealant layer which can withstand a heat sterilization treatment.

The content of the polypropylene in the sealant layer is preferably 70% by mass or more, more preferably 80% by mass or more, still more preferably 90% by mass or more, and yet more preferably 95% by mass or more. This can, for example, improve the recyclability of the packaging material.

When the sealant layer is made of polypropylene, the content of the polypropylene relative to the total amount of the resin material included in the laminate is preferably 80% by mass or more, more preferably 85% by mass or more, still more preferably 88% by mass or more, and particularly preferably 90% by mass or more. This enables, for example, the production of a packaging material that is a mono-material using the laminate, thereby improving the recyclability of the packaging material.

Examples of the polypropylene include propylene homopolymers, propylene random copolymers such as a propylene-$\alpha$-olefin random copolymer, and propylene block copolymers such as a propylene-$\alpha$-olefin block copolymer. The details of the $\alpha$-olefin are as mentioned above. From the viewpoint of the heat-sealing properties, the density of the polypropylene is, for example, 0.88 g/cm3 or more and 0.92 g/cm3 or less. The lower limit of the density of the polypropylene is, for example, 0.88 g/cm$^3$ or more. The upper limit of the density of the polypropylene is, for example, 0.92 g/cm$^3$ or less. The density is measured in accordance with JIS K7112, particularly Method D (density-gradient tube method, 23°C). From the viewpoint of reduction in environmental impact, biomass-derived polypropylene and/or recycled polypropylene may be used.

The sealant layer may contain additives. Examples of additives include a crosslinking agent, an antioxidant, an antiblocking agent, a slip agent, an ultraviolet absorber, a light stabilizer, a filler, a reinforcing agent, a lubricant, an antistatic agent, a pigment, and a modifying resin. For example, the sealant layer may contain the antistatic agent. This makes it possible to suppress the generation of static electricity on the surface of the laminate, and for example, to suppress the adhesion between laminates.

The sealant layer may have a single-layer structure or a multi-layer structure. The thickness of the sealant layer is preferably 10 μm or more and 200 μm or less, and more preferably 20 μm or more and 150 μm or less. The lower limit of the thickness of the sealant layer is preferably 10 μm or more, more preferably 20 μm or more, and still more preferably 30 μm or more. The upper limit of the thickness of the sealant layer is preferably 200 μm or less, more preferably 150 μm or less, and still more preferably 100 μm or less. When the thickness is the lower limit or more, for example, the lamination strength of the packaging material including the laminate can be further improved. When the thickness is the upper limit or less, for example, the processability of the laminate can be further improved. When a pouch (particularly a retort pouch) is produced from the laminate, the thickness of the sealant layer is more preferably 30 μm or more and 100 μm or less.

From the viewpoint of heat-sealing properties, the sealant layer is preferably an unoriented resin film, and more preferably an unoriented polypropylene film. The resin film can be produced by, for example, a casting method, a T-die method, or an inflation method. The sealant layer may be laminated through an adhesive layer as in the present embodiment, or may be formed by melt-extruding a resin material which can be fused to each other by heat onto the barrier film.

[Other Lamination Examples]

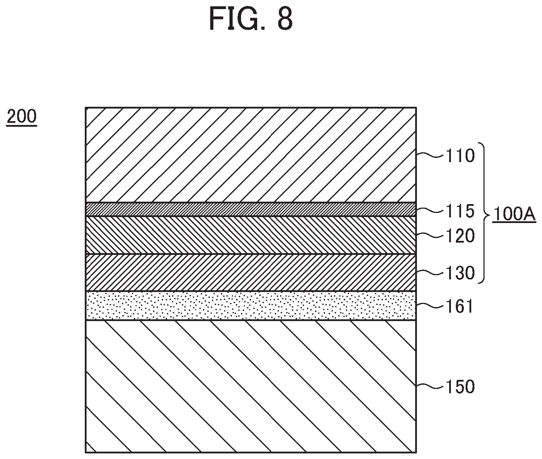

FIG. 8 is an example in which the covering layer 130 of the barrier film A is laminated to the sealant layer 150 through the first adhesive layer 161. Thus, in the present invention, the laminate is not limited to a three-layer film structure, but may also have a two-layer structure.

[Packaging Products]

The above laminate can be used as a packaging product such as a packaging bag for containing contents such as foods by forming it into a bag shape with the sealant layer on the inside. The laminate of the present invention is a heatsterilized laminate which can be used for the packaging bag containing retort foods or boiled foods.

The heat sterilization treatment means not only a retort treatment but also a boiling treatment. The boiling treatment means, for example, heat sterilization at 60 to 100°C for 10 to 60 minutes.

The retort treatment means a pressure heat sterilization treatment at 100 to 140°C. The pressure heat sterilization is preferably a pressure heat sterilization in which the F value, which is a concept that represents the integral value of the heat load, is 4 or more, and more specifically a pressure heat sterilization at 121°C for 3 minutes or more, or at 120°C for 4 minutes or more as stipulated by the Food Sanitation Act. More specifically, the treatment is generally performed at 120 to 130°C for 15 to 60 minutes, but may also be performed under treatment conditions of 105 to 120°C for 15 to 60 minutes, or 130 to 140°C for 15 to 60 minutes.

[Composite Elastic Modulus and Indentation Hardness of Covering Layer]

In the present invention, the composite elastic modulus and indentation hardness after lamination and after the above heat sterilization treatment are a composite elastic modulus and an indentation hardness measured by the nanoindentation method from a cross-section of the covering layer of the laminate, and the composite elastic modulus is 5.0 GPa or more and 8.5 GPa or less, and the indentation hardness is 0.9 GPa or more and 1.7 GPa or less. Within this range, deterioration of the barrier properties can be suppressed not only after the boiling treatment of the laminate but also after the retort treatment.

It is more preferred that the composite elastic modulus is 6.0 GPa or more and 8.5 GPa or less, and the indentation hardness is 1.0 GPa or more and 1.5 GPa or less, thus making it possible to suppress deterioration of the barrier properties even after high retort treatment of the laminate.

The indentation hardness of the covering layer is calculated by the following equation (1). Furthermore, the composite elastic modulus of the covering layer is calculated by the following equation (2). Indentation hardness = Pmax/A ... (1)

[Math. 1]

where

Pmax: Maximum load (unit: $\mu$N)
A: Projected contact area at maximum depth (unit: $\mu m^2$)
S: Contact stiffness

To measure the composite elastic modulus and indentation hardness of the covering layer in the laminate after the heat sterilization treatment, the laminate after the heat sterilization treatment is embedded in an epoxy resin or the like and this embedded sample is then processed using a microtome to expose the cross-section of the covering layer as a pretreatment process. This enables the measurement by the nanoindentation method from the "cross-section" of the covering layer of the laminate. This method enables the measurement of the composite elastic modulus and the indentation hardness of the covering layer without delaminating the laminate to expose the covering layer. The above cross-section is obtained by cutting in the thickness direction perpendicular to the main plane of the film. The cross-section was produced by creating a block with the film embedded in the embedding resin and cutting this block using a commercially available rotary microtome at room temperature (23°C). Finishing was performed using a diamond knife.

To measure the indentation hardness and the composite elastic modulus of the cross-section of the covering layer using the nanoindentation method, the indenter is first placed on the cross-section of the covering layer and, over 10 seconds, the indenter is pressed into the cross-section to a load of 15 $\mu$N, and held at this state for 5 seconds. The indenter was pressed into a location near the center of the exposed cross-section in the thickness direction of the covering layer. The load was then released over 10 seconds. This yielded the maximum load Pmax, the projected contact area A at maximum depth, and the load-displacement curve. Unless otherwise specified, the measurement is performed under the environment of 50% relative humidity and 23°C. The measurement is performed at five or more locations on the same cross-section, and the indentation hardness and the composite elastic modulus are mentioned as the arithmetic mean of the values obtained from the five locations showing satisfactory reproducibility. Further detailed measurement conditions are those mentioned in Examples.

When the laminate undergoes the heat sterilization treatment, the covering layer requires a certain degree of hardness to suppress damage to the deposition film caused by thermal shrinkage of the OPP base material during the heat sterilization treatment. Meanwhile, during the lamination process of the packaging material, the OPP base material is oriented due to tension, which also causes deterioration of the barrier properties due to damage to the deposition film, however, deterioration of the barrier properties can be suppressed by imparting moderate flexibility to the covering layer.

The present inventors have found a range of the elastic modulus and the indentation hardness suitable for heat sterilization treatment applications such as a retort treatment regarding the covering layer constituting a mono-material packaging material, which is a laminate of the polypropylene film, and have found a laminate which can suppress deterioration of barrier properties even "after heat sterilization treatment" of "after lamination".

As a result, the oxygen transmittance of the laminate after the heat sterilization treatment, as measured at 23°C and 90% RH in accordance with JIS K 7126-2, has been successfully achieved to be 10.0 cc/(m$^2$·day·atm) or less, preferably 5.0 cc/(m$^2$·day·atm) or less, particularly preferably 2.0 cc/(m$^2$·day·atm) or less, and most preferably 1.0 cc/(m$^2$·day·atm) or less. The water vapor transmittance after the heat sterilization treatment, as measured at 40°C and 100% RH in accordance with JIS K 7129 Method B, is preferably less than 3.0 g/(m$^2$·day), and more preferably 2.0

g/(m$^2$·day) or less. Thus, a laminate with high gas barrier properties even after the retort treatment is obtained.

The composite elastic modulus and the indentation hardness of the covering layer can be adjusted, for example, by the composition of the covering layer or the drying temperature during formation of the covering layer.

EXAMPLES

The present invention will be described in further detail below by Examples, but the present invention is not limited to these descriptions in any way. First, the barrier films according to Examples 1 to 18 and Comparative Examples 1 to 6 were produced using a film-forming apparatus 10, which is the film-forming apparatus mentioned in the present embodiment, and a film-forming method and a covering layer-forming process.

Tables 1 and 2 collectively show the pretreatment conditions, vapor deposition conditions and the like.

(Example 1)

A base layer made of a mixture of 50% by mass of a copolymer of metaxylenediamine and adipic acid, and 50% by mass of a copolymer of dicarboxylic acid consisting of isophthalic acid/terephthalic acid in a molar ratio of 2/1 and hexamethylenediamine (referred to as PA1 in Table 1), a base layer made of an acid-modified polypropylene random copolymer as a first layer, homopolypropylene as a third layer, and a layer composed of a copolymer of propylene, ethylene, and 1-butene as a second layer, were co-extruded in the order of base layer/first layer/third layer/second layer, and then oriented 5 times in the machine direction (MD direction) and 10 times in the transverse direction (TD direction) using a sequential biaxial orientation machine to produce a 20 μm thick base film including the base layer (0.7 μm), the first layer (1.5 μm), the third layer (17.1 μm), and the second layer (0.7 μm).

Next, as a humidity control process, a rolled original material was rewound in an atmosphere of 25°C and 50% RH, and then stored at 25°C and 50% RH for 3 days for humidity control.

First, the following pretreatment process was performed in the film-forming apparatus.

<Pretreatment Process>

In the pretreatment process, the surface of the base material 1 was plasma-pretreated using the plasma pretreatment mechanism 11B shown in FIG. 2 and FIG. 3. Specifically, first, the pressure in the plasma pretreatment room 12B was adjusted using a decompression chamber 12 while supplying a plasma-forming gas to the plasma pretreatment room 12B using a plasma source gas supply part. Then, a voltage was applied between the pretreatment roller 20 and the electrode section 21 to generate plasma, and the surface of the base material 1 was subjected to plasma pretreatment. The conditions for the plasma pretreatment were as follows.

<Pretreatment Conditions>

Transport speed of base material: 420 m/min
High frequency power output: 4 kW
High frequency power source frequency: 40 kHz
Plasma intensity: 550 W·sec/m$^2$
Plasma-forming gas: oxygen 100 (sccm) and argon 1,000 (sccm)
Magnetic forming method: permanent magnet of 1,000 Gauss
Voltage applied between pretreatment drum and plasma supply nozzle 420 V
Pressure of pretreatment compartment: $2.0 \times 10^{-1}$ Pa

Subsequently, a film-forming process was performed in the film-forming apparatus. In the film-forming process, a deposition film containing aluminum oxide was formed by a vacuum vapor deposition method using a resistance heating evaporation mechanism 24 as shown in FIG. 6. Specifically, while an aluminum metal wire was supplied into a boat 24b as a vapor deposition material, the vapor deposition material in the boat 24b was heated using the resistance heating evaporation mechanism 24, and the aluminum was evaporated so that it reached the surface of the base layer of the substrate film and, at the same time, a deposition film was formed on the surface of the base material film while oxygen was supplied. The cold trap is not in operation.

Using the above method, a deposition film was laminated on the base material film. At this time, the transport speed was 420 m/min, and the thickness of the deposition film was 10.0 nm. The light transmittance at a wavelength of 366 nm measured in-line after vapor deposition was set so that the transmittance when the base material 1 was subjected to pretreatment and was not yet vapor-deposited was defined as 100%. Vapor deposition was then initiated, and the oxygen supply rate was feedback-controlled to achieve a light transmittance of 72.0%. The pressure during vapor deposition was 0.2 Pa.

The wound body of the barrier film which had undergone the above film-forming process was subjected to an aging treatment at 55°C and 50 RH% for 3 days.

Furthermore, a covering layer was laminated on the deposition film in the covering layer-forming process. A solution A was prepared by mixing polyvinyl alcohol with a saponification degree of 99% or more and a degree of polymerization of 2,400 as a water-soluble polymer with water in a ratio of water to isopropyl alcohol of 95/5 so as to have a solid content of 4%. A solution B was prepared by mixing water, isopropyl alcohol, and 1 N hydrochloric acid in a ratio of 65/34/1. Tetraethoxysilane was used as a metal alkoxide to prepare a solution C. A solution D was prepared by adjusting the ratio of the solution B to the solution C, and a solution obtained by mixing the solution A with the solution D and adjusting a ratio of the solutions to prepare a barrier coating agent. The ratio of the solution B to the solution C, and the ratio of the solution A to the solution D were adjusted so that the solid content of the barrier coating agent after mixing was 7% and the $SiO_2$ equivalent mass of tetraethoxysilane relative to the solid content of PVA was 2.5. This barrier coating agent was referred to as a solution X.

The barrier coating agent prepared above was applied on the deposition film by a direct gravure method. The film was then dried at 100°C for 10 seconds to form a covering layer with a dry thickness of 300 nm. The covering layer was then subjected to an aging treatment at 55°C and 50% RH for 7 days to produce a barrier film of Example 1.

(Example 2)

The barrier film of Example 2 was produced in the same manner as in Example 1, except that the oxygen supply amount was adjusted in the film-forming process and feedback-controlled so that the light transmittance became 76.0%.

(Example 3)

The barrier film of Example 3 was produced in the same manner as in Example 1, except that the oxygen supply amount was adjusted in the film-forming process and feedback-controlled so that the light transmittance became 80.0%.

(Example 4)

The barrier film of Example 4 was produced in the same manner as in Example 3, except that, as the humidity control process, a rolled original material was rewound in an atmosphere of 30°C and 60% RH and was then stored at 30°C and 60% RH for 3 days for humidity control.

(Example 5)

The barrier film of Example 5 was produced in the same manner as in Example 2, except that the base layer was made of a mixture of 70% by mass of a copolymer of metaxylenediamine and adipic acid, and 30% by mass of a copolymer of dicarboxylic acid and hexamethylenediamine in a molar ratio of isophthalic acid/terephthalic acid of 2/1 (referred to as PA2 in Table 1).

(Example 6)

The barrier film of Example 6 was produced in the same manner as in Example 2, except that the base layer was made of a mixture of 20% by mass of a copolymer of metaxylenediamine and adipic acid, and 80% by mass of a copolymer of dicarboxylic acid and hexamethylenediamine in a molar ratio of isophthalic acid/terephthalic acid of 2/1 (referred to as PA3 in Table 1).

(Example 7)

The barrier film of Example 7 was produced in the same manner as in Example 2, except that the base layer was made of a mixture of 10% by mass of a copolymer of metaxylenediamine and adipic acid, and 90% by mass of a copolymer of dicarboxylic acid and hexamethylenediamine in a molar ratio of isophthalic acid/terephthalic acid of 2/1 (referred to as PA4 in Table 1).

(Example 8)

The barrier film of Example 8 was produced in the same manner as in Example 2, except that the base layer was made of 0% by mass of a copolymer of metaxylenediamine and adipic acid, and 100% by mass of a copolymer of dicarboxylic acid and hexamethylenediamine in an isophthalic acid/terephthalic acid molar ratio of 2/1 (referred to as PA5 in Table 1).

(Example 9)

The barrier film of Example 9 was produced in the same manner as in Example 2, except that, in the covering layer-forming process, the ratio of the solution B to the solution C, and the ratio of the solution A to the solution D were adjusted so that the $SiO_2$ equivalent mass of tetraethoxysilane relative to the solid content of PVA became 2.0.

(Example 10)

The barrier film of Example 10 was produced in the same manner as in Example 2, except that, in the covering layer-forming process, the ratio of the solution B to the solution C, and the ratio of the solution A to the solution D were adjusted so that the $SiO_2$ equivalent mass of tetraethoxysilane relative to the solid content of PVA became 3.0.

(Example 11)

The barrier film of Example 11 was produced in the same manner as in Example 2, except that, in the covering layer-forming process, the ratio of the solution B to the solution C, and the ratio of the solution A to the solution D were adjusted so that the $SiO_2$ equivalent mass of tetraethoxysilane relative to the solid content of PVA became 3.5.

(Example 12)

When mixing the solution B and the solution C, 8% of 1,3,5-tris(3-trialkoxysilylpropyl) isocyanurate was added relative to the weight of tetraethoxysilane and, as a covering layer, the ratio of the solution B to solution C, and the ratio of the solution A to the solution D were adjusted so that the solid content became 7% and the $SiO_2$ equivalent mass of tetraethoxysilane relative to the solid content of PVA became 4.0, and the mixed barrier coating agent was referred to as a solution Z. The barrier film of Example 12 was produced in the same manner as in Example 2, except that, the solution Z was used instead of the solution X in the covering layer-forming process.

(Example 13)

An acrylic polyol solution was prepared as a base agent. The solvent for the base agent was a solvent mixture of 10% by weight ethyl acetate, 20% by weight propyl acetate, 20% by weight isopropyl alcohol, and 50% by weight propylene glycol monomethyl ether. An ethyl acetate solution of a mixture (molar ratio of 3:1) of xylene diisocyanate (XDI) of a trimethylolpropane (TMP) adduct and hexamethylene diisocyanate (HDI) was prepared as a curing agent. Then, the base agent and the curing agent were blended so as to have an NCO/OH ratio of 1.5 to obtain a coating solution for formation of a covering layer (solution P). The barrier film of Example 13 was produced in the same manner as Example 2, except that the solution P was applied by a direct gravure method and then dried at 100°C for 10 seconds to form an 800 nm thick cover layer.

(Example 14)

The barrier film of Example 14 was produced in the same manner as in Example 2, except that the base layer was made of a mixture of 86% by mass of an amorphous aromatic polyamide (a copolymer of 1,6-hexanediamine and dicarboxylic acid in which a molar ratio of isophthalic acid/terephthalic acid is 7/3) and 14% by mass of an aliphatic polyamide (a homopolymer of 6-aminohexanoic acid units, synthesized by ring-opening polymerization of ε-caprolactam) (referred to as PA6 in Table 1).

(Example 15)

The barrier film of Example 15 was produced in the same manner as in Example 2, except that the base layer was made of a mixture of 90% by mass of an amorphous aromatic polyamide (a copolymer of 1,6-hexanediamine and dicarboxylic acid in which a molar ratio of isophthalic acid/terephthalic acid is 7/3) and 10% by mass of an aliphatic polyamide (a homopolymer of 6-aminohexanoic acid units, synthesized by ring-opening polymerization of ε-caprolactam) (referred to as PA7 in Table 1).

(Example 16)

The barrier film of Example 16 was produced in the same manner as in Example 2, except that the base layer was made of a mixture of 78.1% by mass of an amorphous alicyclic polyamide (a copolymer of 4,4'-methylenebis(2-methylcyclohexylamine) and dodecanedioic acid) and 21.9% by mass of a crystalline aliphatic chain polyamide (polylauryllactam) (referred to as PA8 in Table 1).

(Example 17)

The barrier film of Example 17 was produced in the same manner as in Example 2, except that the base layer was made of a mixture of 84.3% by mass of an amorphous alicyclic polyamide (a copolymer of 4,4'-methylenebis(2-methylcyclohexylamine) and dodecanedioic acid) and 15.7% by mass of a crystalline aliphatic chain polyamide (polylauryllactam) (referred to as PA9 in Table 1).

(Example 18)

The barrier film of Example 18 was produced in the same manner as in Example 2, except that the base layer was made of a mixture of 90.6% by mass of an amorphous alicyclic polyamide (a copolymer of 4,4'-methylenebis(2-methylcyclohexylamine) and dodecanedioic acid) and 9.4% by mass of a crystalline aliphatic chain polyamide (polylauryllactam) (referred to as PA10 in Table 1).

(Comparative Example 1)

The barrier film in Comparative Example 1 was produced in the same manner as in Example 1, except that the oxygen supply amount was adjusted during the film-forming process and feedback-controlled so that the light transmittance became 88.0%.

(Comparative Example 2)

A barrier film of Comparative Example 2 was produced in the same manner as in Example 1, except that the oxygen supply amount was adjusted in the film-forming process and feedback-controlled so that the light transmittance became 93.0%.

(Comparative Example 3)

The polypropylene base material of the base material 1 used was a 20 μm thick biaxially oriented polypropylene film (the first layer, which was the surface on the vapor deposition side, was a 1.0 μm thick layer made of a copolymer of propylene, ethylene, and 1-butene; the second layer, which was the surface opposite to the vapor deposition side, was a 1.0 μm thick layer made of a copolymer of propylene, ethylene, and 1-butene; the third layer (intermediate layer) was an 18 μm thick homopolypropylene; and the surface of the first layer was subjected to a corona treatment).

Then, a coating solution for formation of an anchor coat layer, consisting of a mixture of hydroxyl-containing (meth)acrylic resin and tolylene diisocyanate, was applied on the first layer of the base material 1 using the direct gravure method, as a base layer, and then dried to form a 0.2 μm thick anchor coat layer.

After formation of the anchor coat layer, as a humidity control process, a rolled original material was rewound in an atmosphere of 25°C and 50% RH, and then stored at 25°C and 50% RH for 3 days for humidity control.

In the film-forming process, a deposition film containing aluminum oxide was formed using the evaporation mechanism 24 of a resistance heating system as shown in FIG. 6 by a vacuum vapor deposition method. Specifically, a deposition film was formed on the surface of the base material 1 by heating the vapor deposition material in the boat 24b using the evaporation mechanism 24 of the resistance heating system while supplying aluminum metal wire as the vapor deposition material into the boat 24b and evaporating aluminum so as to arrive at the surface of the base material 1 while supplying oxygen.

Plasma assistance at the time of vapor deposition was performed using a form of a plasma supply mechanism 50 including the hollow cathode 51 shown in FIG. 6 and anodes (not shown) located on both sides of the base material 1 in the width direction viewed from the boat 24b and facing the opening of the cavity of the hollow cathode 51 by supplying a plasma source gas (argon gas) to the cavity of the hollow cathode 51, discharging to excite plasma, and extracting this plasma between the surface of the base material 1 and the evaporation mechanism 24 by the facing anodes. The conditions for the plasma assistance were adjusted such that the amount of argon gas supplied to the hollow cathode was 80 sccm, the anode current was 154 A, and the anode voltage was 18 V. After operating cold trap, the plasma posttreatment process after the plasma assistance process at the time of vapor deposition was not performed.

By the above method, a deposition film was laminated on the base material 1. At this time, the transport speed was 600 m/min, and the thickness of the deposition film was 8.9 nm. At this time, the light transmittance at a wavelength of 366 nm measured in-line after vapor deposition was set so that the transmittance when the base material 1 was subjected to pretreatment and was not yet vapor-deposited was defined as 100%. Then, vapor deposition was initiated, and the oxygen supply amount was feedback-controlled such that the light transmittance became 99.7%. The pressure during the vapor deposition was 1.1 Pa.

The wound body of the barrier film after the film-forming process was subjected to aging treatment at 55°C and 50% RH for 3 days.

After the covering layer-forming process, the covering layer was formed in the same manner as in Example 1, and a barrier film of Comparative Example 3 was produced.

(Comparative Example 4)

A barrier film of Comparative Example 4 was produced in the same manner as in Comparative Example 3, except that, in the film-forming process, the plasma-assisted conditions were an anode current of 140 A and an anode voltage of 16 V.

(Comparative Example 5)

The barrier film of Comparative Example 5 was produced in the same manner as in Comparative Example 3, except that, in the film-forming process, cold trap was not operated, plasma assistance was not performed, the transport speed was 670 m/min, the thickness of the deposition film was 8.0 nm, the light transmittance was 94.0%, and the pressure was 0.3 Pa.

(Comparative Example 6)

In the film-forming process, the supply amount of the aluminum metal wire was set so that the thickness of the deposition film would be 12 nm, and then vapor deposition was performed without supplying oxygen, resulting in a light transmittance of 34.0% under pressure of 0.1 Pa. The barrier film of Comparative Example 6 was produced in the same manner as in Example 1, except that no covering layer was subsequently formed.

[Table 1]

| | Base material | Base layer | Transport speed (m/min) | Cold trap | Hollow cathode Ar flow rate (sccm) | Hollow cathode Anode current (A) | Hollow cathode Anode voltage (V) | Transmittance (%) @366nm | Pressure (Pa) | Aging after vapor deposition |
|---|---|---|---|---|---|---|---|---|---|---|
| Example 1 | OPP | PA1 | 420 | Not used | 0 | 0 | 0 | 72.0 | 0.2 | At 50°C and 50%RH for 3 days |
| Example 2 | OPP | PA1 | 420 | Not used | 0 | 0 | 0 | 76.0 | 0.2 | At 50°C and 50%RH for 3 days |
| Example 3 | OPP | PA1 | 420 | Not used | 0 | 0 | 0 | 80.0 | 0.2 | At 50°C and 50%RH for 3 days |
| Example 4 | OPP | PA1 | 420 | Not used | 0 | 0 | 0 | 80.0 | 0.2 | At 50°C and 50%RH for 3 days |
| Example 5 | OPP | PA2 | 420 | Not used | 0 | 0 | 0 | 76.0 | 0.2 | At 50°C and 50%RH for 3 days |
| Example 6 | OPP | PA3 | 420 | Not used | 0 | 0 | 0 | 76.0 | 0.2 | At 50°C and 50%RH for 3 days |
| Example 7 | OPP | PA4 | 420 | Not used | 0 | 0 | 0 | 76.0 | 0.2 | At 50°C and 50%RH for 3 days |
| Example 8 | OPP | PA5 | 420 | Not used | 0 | 0 | 0 | 76.0 | 0.2 | At 50°C and 50%RH for 3 days |
| Example 9 | OPP | PA1 | 420 | Not used | 0 | 0 | 0 | 76.0 | 0.2 | At 50°C and 50%RH for 3 days |
| Example 10 | OPP | PA1 | 420 | Not used | 0 | 0 | 0 | 76.0 | 0.2 | At 50°C and 50%RH for 3 days |

(continued)

| | Base material | Base layer | Transport speed (m/min) | Cold trap | Hollow cathode Ar flow rate (sccm) | Hollow cathode Anode current (A) | Hollow cathode Anode voltage (V) | Transmittance (%) @366nm | Pressure (Pa) | Aging after vapor deposition |
|---|---|---|---|---|---|---|---|---|---|---|
| Example 11 | OPP | PA1 | 420 | Not used | 0 | 0 | 0 | 76.0 | 0.2 | At 50°C and 50%RH for 3 days |
| Example 12 | OPP | PA1 | 420 | Not used | 0 | 0 | 0 | 76.0 | 0.2 | At 50°C and 50%RH for 3 days |
| Example 13 | OPP | PA1 | 420 | Not used | 0 | 0 | 0 | 77.0 | 0.2 | At 50°C and 50%RH for 3 days |
| Example 14 | OPP | PA6 | 420 | Not used | 0 | 0 | 0 | 76.0 | 0.2 | At 50°C and 50%RH for 3 days |
| Example 15 | OPP | PA7 | 420 | Not used | 0 | 0 | 0 | 76.0 | 0.2 | At 50°C and 50%RH for 3 days |
| Example 16 | OPP | PA8 | 420 | Not used | 0 | 0 | 0 | 76.0 | 0.2 | At 50°C and 50%RH for 3 days |
| Example 17 | OPP | PA9 | 420 | Not used | 0 | 0 | 0 | 76.0 | 0.2 | At 50°C and 50%RH for 3 days |
| Example 18 | OPP | PA10 | 420 | Not used | 0 | 0 | 0 | 76.0 | 0.2 | At 50°C and 50%RH for 3 days |
| Comparative Example1 | OPP | PA1 | 420 | Not used | 0 | 0 | 0 | 88.0 | 0.2 | At 50°C and 50%RH for 3 days |
| Comparative Example2 | OPP | PA1 | 420 | Not used | 0 | 0 | 0 | 93.0 | 0.3 | At 50°C and 50%RH for 3 days |

| | Base material | Base layer | Transport speed | Cold trap | Hollow cathode Ar flow rate | Hollow cathode Anode current | Hollow cathode Anode voltage | Transmittance (%) | Pressure | Aging after vapor deposition |
|---|---|---|---|---|---|---|---|---|---|---|
| | | | (m/min) | | (sccm) | (A) | (V) | @366nm | (Pa) | |
| Comparative Example3 | OPP | AC | 600 | Used | 80 | 154 | 18 | 99.7 | 1.1 | At 50°C and 50%RH for 3 days |
| Comparative Example4 | OPP | AC | 600 | Used | 80 | 140 | 16 | 99.7 | 1.1 | At 50°C and 50%RH for 3 days |
| Comparative Example5 | OPP | AC | 670 | Not used | 0 | 0 | 0 | 94.0 | 0.3 | At 50°C and 50%RH for 3 days |
| Comparative Example6 | OPP | PA1 | 420 | Not used | 0 | 0 | 0 | 34.7 | 0.1 | At 50°C and 50%RH for 3 days |

[Table 2]

| | Composition of covering layer solution | Solid content ratio | Aging after formation of covering layer |
|---|---|---|---|
| Example 1 | Solution X | 2.5 | At 50°C and 50%RH for 7 days |
| Example 2 | Solution X | 2.5 | At 50°C and 50%RH for 7 days |
| Example 3 | Solution X | 2.5 | At 50°C and 50%RH for 7 days |
| Example 4 | Solution X | 2.5 | At 50°C and 50%RH for 7 days |
| Example 5 | Solution X | 2.5 | At 50°C and 50%RH for 7 days |
| Example 6 | Solution X | 2.5 | At 50°C and 50%RH for 7 days |
| Example 7 | Solution X | 2.5 | At 50°C and 50%RH for 7 days |
| Example 8 | Solution X | 2.5 | At 50°C and 50%RH for 7 days |
| Example 9 | Solution X | 2.0 | At 50°C and 50%RH for 7 days |
| Example 10 | Solution X | 3.0 | At 50°C and 50%RH for 7 days |
| Example 11 | Solution X | 3.5 | At 50°C and 50%RH for 7 days |
| Example 12 | Solution Z | 4.0 | At 50°C and 50%RH for 7 days |
| Example 13 | Solution P | - | At 50°C and 50%RH for 7 days |
| Example 14 | Solution X | 2.5 | At 50°C and 50%RH for 7 days |
| Example 15 | Solution X | 2.5 | At 50°C and 50%RH for 7 days |
| Example 16 | Solution X | 2.5 | At 50°C and 50%RH for 7 days |
| Example 17 | Solution X | 2.5 | At 50°C and 50%RH for 7 days |
| Example 18 | Solution X | 2.5 | At 50°C and 50%RH for 7 days |
| Comparative Example1 | Solution X | 2.5 | At 50°C and 50%RH for 7 days |
| Comparative Example2 | Solution X | 2.5 | At 50°C and 50%RH for 7 days |
| Comparative Example3 | Solution X | 2.5 | At 50°C and 50%RH for 7 days |
| Comparative Example4 | Solution X | 2.5 | At 50°C and 50%RH for 7 days |
| Comparative Example5 | Solution X | 2.5 | At 50°C and 50%RH for 7 days |
| Comparative Example6 | None | None | None |

[Acquisition and Analysis of XAFS Spectrum]

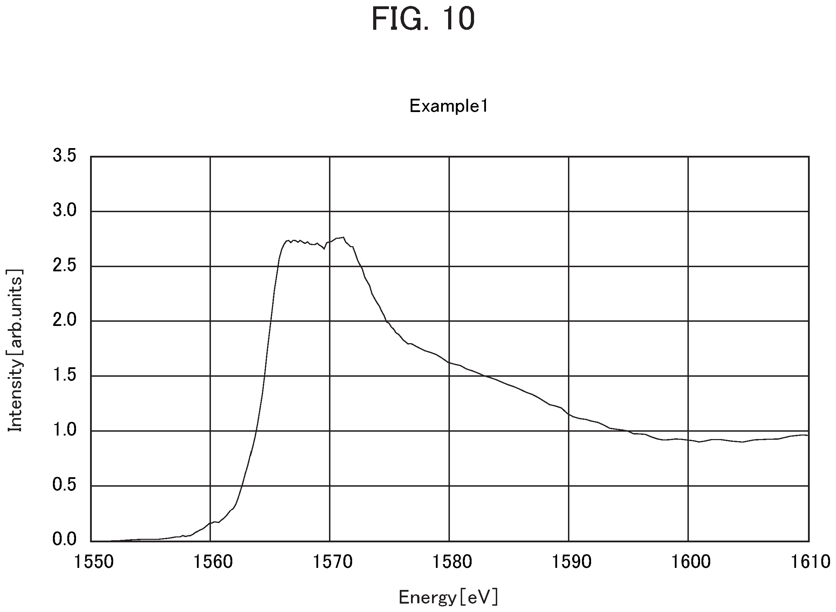

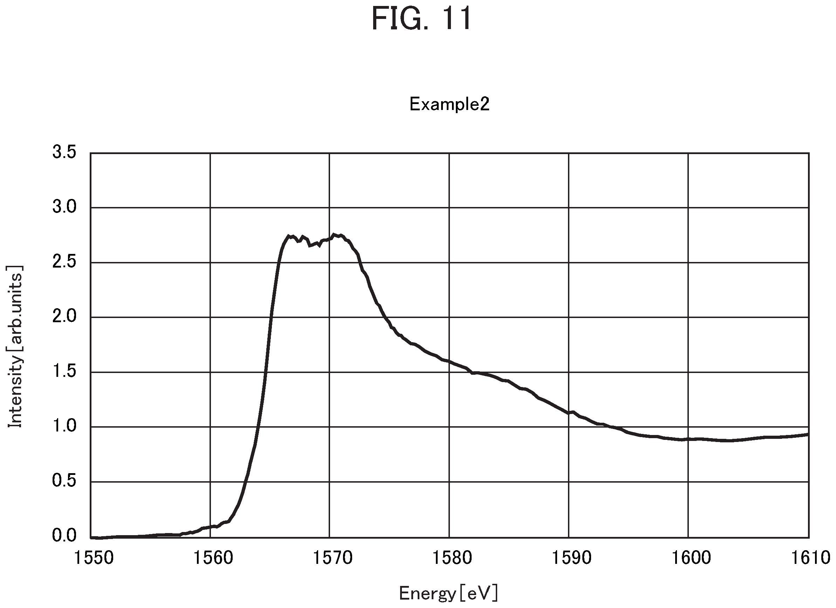

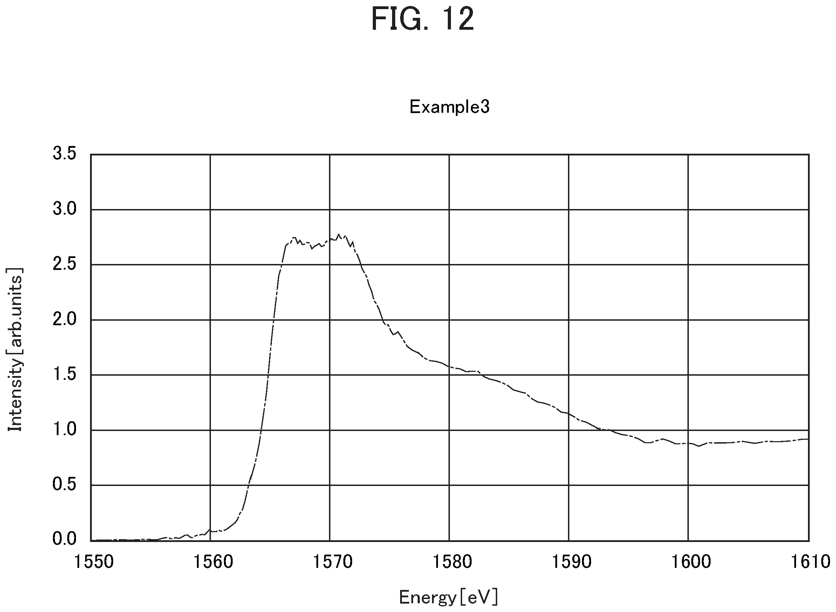

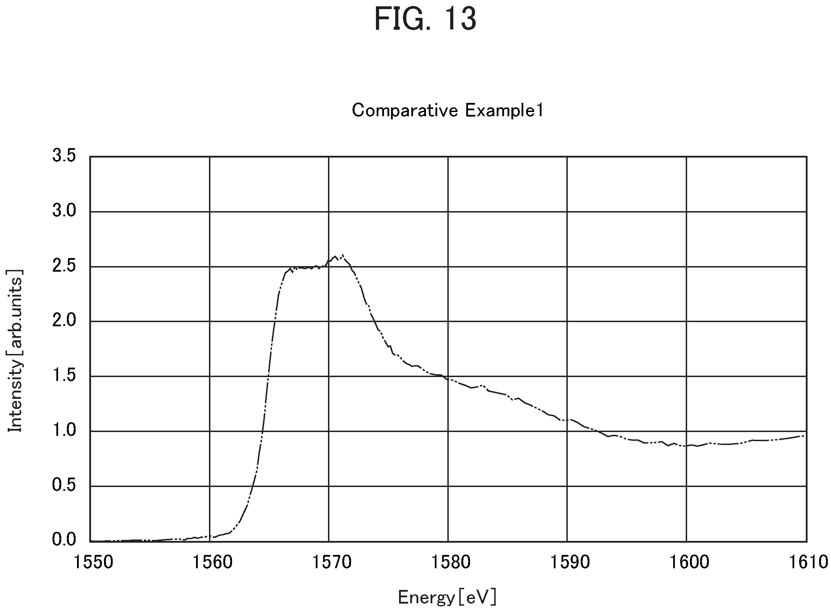

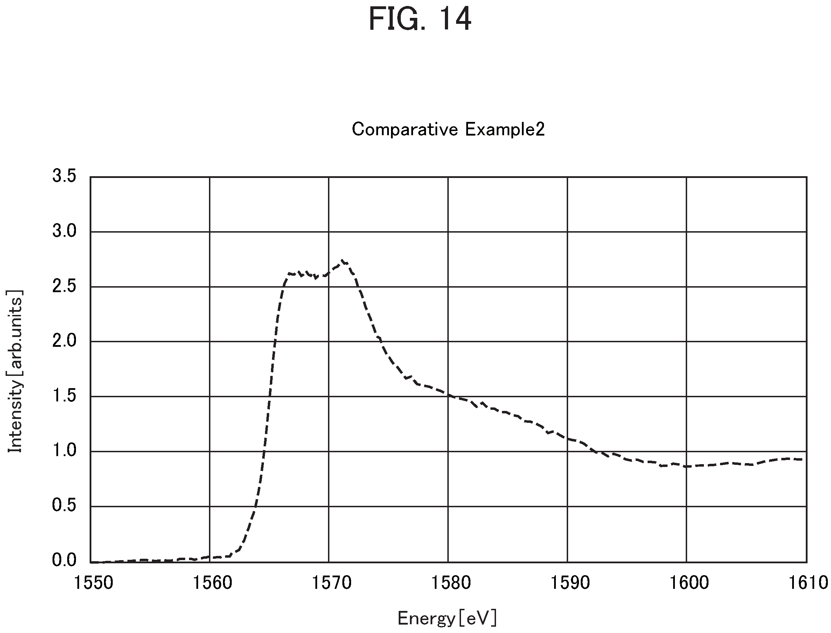

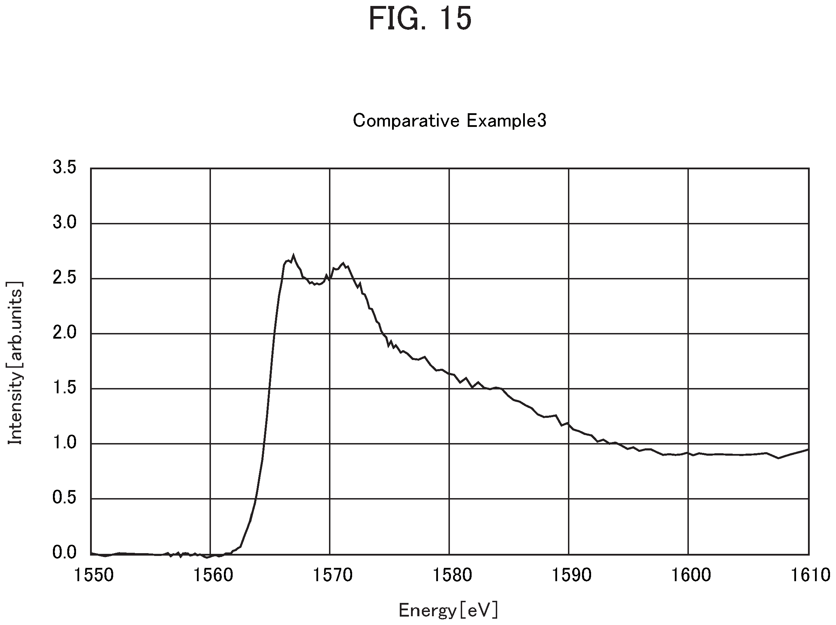

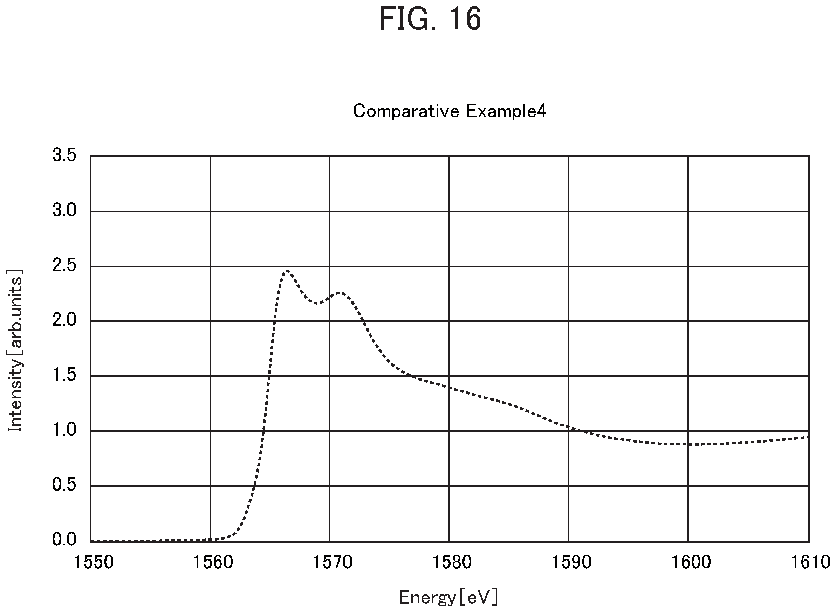

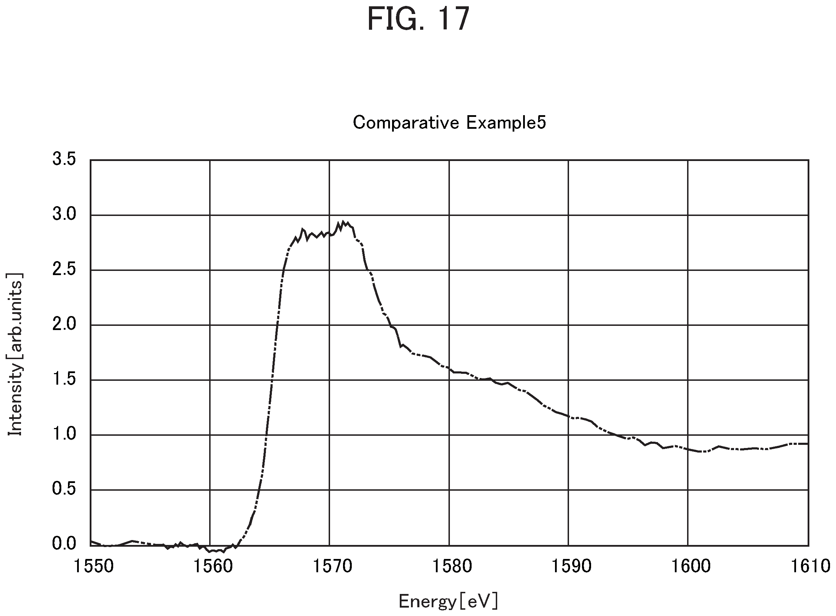

XAFS spectra of the barrier films of Examples 1 to 12 and Comparative Examples 1 to 6 were obtained from the surface side of the barrier film (from the surface side of the deposition film or the surface side of the covering layer) under the following measurement conditions. Among them, the results of Examples 1 to 3 are shown in FIG. 10 to FIG. 12, and the results of Comparative Examples 1 to 5 are shown in FIG. 13 to FIG. 17. The vertical axis of the figure is the intensity of generated fluorescent X-rays (in the figure, shown as absorption intensity (a.u.)), and the horizontal axis is the light (or X-ray) energy (eV).

<Acquisition of XAFS Spectrum>

- Used line: Aichi Synchrotron Radiation Center BL1N2

- Acceleration energy: 1.2 GeV
- Beam size: 1.0 mm in the horizontal direction $\times$ 1.0 mm in vertical
- Incident angle on sample: 22.5° (the perpendicular direction to the sample is defined as 0°)
- Inlet slit: 30 $\mu$m

- Outlet slit: 30 μm
- Measurement method: partial fluorescence yield
- Energy range (Al K-edge): 1,500 to 1,700 eV
- Energy step:

    1,500 to 1,550 eV: 2.0 eV/step
    1,550 to 1,555 eV: 1.0 eV/step
    1,555 to 1,575 eV: 0.2 eV/step
    1,575 to 1,600 eV: 0.5 eV/step
    1,600 to 1,680 eV: 1.0 eV/step
    1,680 to 1,700 eV: 2.0 eV/step
    (Dwell time: all 10 s/point)

- Energy calibration: energy calibration using Au 4f 7/2 of Au plate (calibrated with the value obtained by subtracting the theoretical value 1,500 eV from the measured value)

<XAFS Spectral Analysis>

To compare the data, the region before the absorption edge (pre-edge) and the region after the absorption edge (post-edge) were normalized. Normalization was performed using the measurement data analysis software Athena included in the XAFS analysis program Demeter. Specifically, the pre-edge range was set at 1,530 eV to 1,555 eV, the normalization range was set at 1,600 eV to 1,670 eV, and the normalization order was set at 3.

The following P1 and P2 were calculated from the normalized data. P1 = (average intensity from 1561.0 eV to 1563.6 eV)/(average intensity from 1566.5 eV to 1571.6 eV) P2 = (average intensity from 1570.5 eV to 1571.6 eV)/(average intensity from 1566.5 eV to 1567.6 eV)

The calculated intensity ratios P1 and P2 are shown in Table 3.

[Elemental Analysis of Covering Layer]

The covering layer surfaces of the barrier films of Examples and Comparative Examples were subjected to narrow spectrum measurement for each element using an X-ray photoelectron spectrometer (XPS). The surface after measurement was then etched under the conditions mentioned below to expose a new measurement surface. Narrow spectra for each element were measured on the exposed measurement surface under the same conditions. Analysis software was used to subtract the background using the Shirley method to obtain the integrated intensity (area) of each element's peak for C1s and Si2p. The resulting integrated intensity (area) was used to calculate the percentage of each element (element %). The Si/C ratio was calculated from the percentage of each element after etchings for 60 seconds twice and is shown in Table 3.

<X-Ray Photoelectron Spectroscopy Measurement Conditions>

Apparatus: ESCA3400, manufactured by Shimadzu Corporation
X-ray source: MgKα
Emission current: 20 mA
Accelerating voltage: 10 kV
Resolution: Low
Measurement area: approximately 6 mm diameter

<Etching Conditions>

Ion species: Ar+
Ar gas introduction pressure: $2.0 \times 10^{-2}$ Pa

Emission current: 30 mA
Accelerating voltage: 0.3 kV
Etching time: 60 seconds $\times$ 2

[Table 3]

| | XAFS | XAFS | Covering layer |
|---|---|---|---|
| | | | XPS |
| | Intensity ratio P1 | Intensity ratio P2 | Si/C ratio |
| Example 1 | 0.166 | 1.005 | 1.43 |
| Example 2 | 0.129 | 1.003 | 1.43 |
| Example 3 | 0.096 | 1.010 | 1.43 |
| Example 4 | 0.092 | 1.039 | 1.43 |
| Example 5 | 0.129 | 1.003 | 1.43 |
| Example 6 | 0.129 | 1.003 | 1.43 |
| Example 7 | 0.129 | 1.003 | 1.43 |
| Example 8 | 0.129 | 1.003 | 1.43 |
| Example 9 | 0.129 | 1.003 | 1.34 |
| Example 10 | 0.129 | 1.003 | 1.52 |
| Example 11 | 0.129 | 1.003 | 1. 61 |
| Example 12 | 0.129 | 1.003 | 1. 66 |
| Example 13 | 0.120 | 1.026 | - |
| Example 14 | 0.129 | 1.003 | 1.43 |
| Example 15 | 0.129 | 1.003 | 1.43 |
| Example 16 | 0.129 | 1.003 | 1.43 |
| Example 17 | 0.129 | 1.003 | 1.43 |
| Example 18 | 0.129 | 1.003 | 1.43 |
| Comparative Example1 | 0.077 | 1.039 | 1.43 |
| Comparative Example2 | 0.054 | 1.034 | 1.43 |
| Comparative Example3 | 0.041 | 0.986 | 1.43 |
| Comparative Example4 | 0.067 | 0.944 | 1.43 |
| Comparative Example5 | 0.016 | 1.055 | 1.43 |
| Comparative Example6 | 0.438 | 1.028 | - |

<Production of Laminate>

For the barrier films of Examples and Comparative Examples, the surface on the covering layer 130 side or the surface on the deposition film 120 side, and a second biaxially oriented polypropylene film 140 (thickness of 20 $\mu$m) was adhered via a second adhesive layer 162 by a dry lamination method, using a polyurethane-based 2-part curing solvent-based adhesive. Furthermore, the surface of the barrier film opposite to the covering layer 130, and a sealant layer (60 $\mu$m thick non-oriented polypropylene film) was adhered via a first adhesive layer 161 by a dry lamination method, using a 2-part curing solvent-based adhesive to produce laminates of Examples and Comparative Examples.

<Retort Treatment>

The laminates of Examples and Comparative Examples were subjected to retort treatment at 121°C for 30 minutes.

<Measurement of Barrier Properties of Barrier Films and Laminates>

The values of the water vapor transmittance and oxygen transmittance of the barrier films of Examples and Comparative Examples and the laminate using the same were measured. The results are shown in Table 4.

The oxygen transmittance (cc/($m^2$·day·atm), in the table, expressed as "OTR") was measured with an oxygen transmittance measurement apparatus (manufactured by MOCON, Inc., product name: "OX-TRAN 2/20") under measurement conditions of 23°C and 90% RH in accordance with JIS K 7126-2.

The water vapor transmittance (g/($m^2$·day), in the table, expressed as "WVTR") was measured with a water vapor transmittance measurement apparatus (manufactured by MOCON, Inc., product name: "PERMATORAN-W 3/31") under measurement conditions of 40°C and 100% RH in accordance with JIS K 7129 B method.

<Measurement of Barrier Properties of Barrier Films and Laminates>

The values of the water vapor transmittance and oxygen transmittance of the barrier films of Example 1 and Comparative Examples and the laminate using the same after the Gelbo Flex test under the following conditions were measured. The results are shown in Table 4.

<Gelbo Flex Test after Retort Treatment>

After the retort treatment at 121°C for 30 minutes, the laminates using the barrier films of Examples and Comparative Examples were subjected to the Gelbo Flex test under the following conditions in accordance with ASTM F392, and the values of the water vapor transmittance and oxygen transmittance after the test were measured. The results are shown in Table 4. Gelbo Flex Test Conditions

- Testing machine: BE-1005 Gelbo Flex Tester, manufactured by TESTER SANGYO CO., LTD.

- Sample: A laminate of A4 size (210 mm × 297 mm) set in a cylindrical shape on the testing machine.

- Rotation amount: 400° rotation

- Stroke: 80 mm

- Number of times: 10 times

[Table 4]

|  | Barrier film alone | | After lamination | | After retorting at 121°C for 30 min | | After retorting and Gelbo | |
|---|---|---|---|---|---|---|---|---|
|  | OTR | WVTR | OTR | WVTR | OTR | WVTR | OTR | WVTR |
| Example 1 | 0.2 | 0.3 | 0.1 | 0.3 | 0.3 | 0.9 | 0.5 | 1.1 |
| Example 2 | 0.3 | 0.4 | 0.2 | 0.4 | 0.4 | 0.5 | 0.8 | 0.7 |
| Example 3 | 0.3 | 0.4 | 0.2 | 0.4 | 0.4 | 0.5 | 1.0 | 0.7 |
| Example 4 | 0.3 | 0.6 | 0.2 | 0.5 | 0.4 | 0.6 | 1.0 | 0.8 |
| Example 5 | 0.4 | 0.7 | 0.3 | 0.5 | 0.4 | 0.6 | 0.9 | 0.7 |
| Example 6 | 0.2 | 0.3 | 0.1 | 0.3 | 0.2 | 0.4 | 0.7 | 0.8 |
| Example 7 | 0.2 | 0.3 | 0.1 | 0.3 | 0.2 | 0.4 | 0.8 | 0.8 |
| Example 8 | 0.2 | 0.4 | 0.1 | 0.4 | 0.2 | 0.4 | 1.0 | 1.0 |
| Example 9 | 0.3 | 0.6 | 0.2 | 0.5 | 0.4 | 0.6 | 0.7 | 0.7 |
| Example 10 | 0.2 | 0.4 | 0.1 | 0.4 | 0.2 | 0.5 | 0.7 | 0.7 |
| Example 11 | 0.2 | 0.4 | 0.1 | 0.4 | 0.2 | 0.5 | 0.7 | 0.7 |

(continued)

| | Barrier film alone | | After lamination | | After retorting at 121°C for 30 min | | After retorting and Gelbo | |
|---|---|---|---|---|---|---|---|---|
| | OTR | WVTR | OTR | WVTR | OTR | WVTR | OTR | WVTR |
| Example 12 | 0.2 | 0.3 | 0.1 | 0.3 | 0.2 | 0.4 | 0.9 | 0.7 |
| Example 13 | 0.2 | 0.4 | 0.2 | 0.4 | 0.3 | 1.5 | 0.8 | 1.7 |
| Example 14 | 0.4 | 0.8 | 0.3 | 0.6 | 0.6 | 0.8 | 1.2 | 0.9 |
| Example 15 | 0.3 | 0.6 | 0.2 | 0.5 | 0.5 | 0.7 | 1.1 | 0.8 |
| Example 16 | 0.3 | 0.4 | 0.2 | 0.3 | 0.3 | 0.4 | 0.8 | 0.8 |
| Example 17 | 0.3 | 0.4 | 0.2 | 0.3 | 0.3 | 0.4 | 0.8 | 0.8 |
| Example 18 | 0.4 | 0.4 | 0.3 | 0.3 | 0.3 | 0.4 | 0.7 | 0.8 |
| Comparative Example1 | 0.5 | 3.6 | 0.4 | 1.3 | 0.6 | 0.6 | 1.9 | 0.8 |
| Comparative Example2 | 0.5 | 5.2 | 0.4 | 2.1 | 0.6 | 0.6 | 2.2 | 0.8 |
| Comparative Example3 | 13.0 | 4.3 | 1.0 | 1.6 | 11.3 | 1.4 | >200 | 1.5 |
| Comparative Example4 | 10.5 | 4.7 | 0.9 | 1.5 | 11.2 | 1.3 | >200 | 1.4 |
| Comparative Example5 | 1.8 | 5.2 | 1.2 | 2.3 | 1.4 | 2.3 | 4.1 | 2.3 |
| Comparative Example6 | 79.0 | 6.7 | 24.4 | 1.4 | 23.3 | 2.1 | 27.8 | 2.1 |

From Table 4, it can be seen that laminates using barrier films including polypropylene base materials according to the present embodiment, in which the intensity ratio P1 obtained from the XAFS spectrum is 0.090 or more and 0.170 or less, have high barrier properties after the retort treatment and are excellent in Gelbo flex resistance.

EXPLANATION OF REFERENCE NUMERALS

110: (First) polypropylene base material

115: Base layer
120: Deposition film
130: Covering layer
140: Second polypropylene base material
150: Sealant layer
161: First adhesive layer
162: Second adhesive layer
100, 200: Laminate
100A: Barrier film
10: Film-forming apparatus
P: Plasma
X: Rotation axis
11A: Base material-transporting mechanism
11B: Plasma pretreatment mechanism
11C: Film-forming mechanism
12: Decompression chamber
12A: Base material transport room
12B: Plasma pretreatment room
12C: Film-forming room
13: Unwinding roller
14a to 14d: Guide roll
15: Winding roller
20: Pretreatment roller
21: Electrode section
23: Magnetic field-forming section

23a: First surface
23b: Second surface
231: First magnet
231c: First axis direction portion
232: Second magnet
232c: Second axis direction portion
232d: Connection portion
24: Evaporation mechanism
24b: Boat
25: Film-forming roller
31: Power supply wiring
32: Power source
35a to 35c: Partition wall
50: Plasma supply mechanism
51: Hollow cathode
61: Vapor deposition material supply section
63: Evaporated aluminum vapor

**Claims**

1. A barrier film comprising a polypropylene base material, a base layer, and an aluminum oxide deposition film, laminated in this order, wherein
the aluminum oxide deposition film has an intensity ratio P1 of 0.090 or more and 0.170 or less defined by the following equation when X-ray absorption fine structure analysis is performed from a surface opposite to the polypropylene base material side of the barrier film, P1 = (average intensity from 1561.0 eV to 1563.6 eV)/(average intensity from 1566.5 eV to 1571.6 eV).

2. The barrier film according to claim 1, wherein the aluminum oxide deposition film has an intensity ratio P2 of 0.990 or more and 1.040 or less defined by the following equation when X-ray absorption fine structure analysis is performed from a surface opposite to the polypropylene base material side of the barrier film, P2 = (average intensity from 1570.5 eV to 1571.6 eV)/(average intensity from 1566.5 eV to 1567.6 eV).

3. The barrier film according to claim 1, wherein a covering layer is laminated on the aluminum oxide deposition film.

4. The barrier film according to claim 1, wherein the covering layer has a ratio of silicon atoms to carbon atoms (Si/C) of 1.30 or more and 1.70 or less as measured by X-ray photoelectron spectroscopy (XPS).

5. The barrier film according to claim 1, wherein the base layer is a surface resin layer formed on the polypropylene base material.

6. The barrier film according to claim 5, wherein the base material layer comprises at least a first layer and a second layer, and the first layer is formed on the base layer side,

   the first layer contains modified polypropylene, and
   the surface resin layer contains a polyamide resin.

7. The barrier film according to claim 6, wherein the polyamide resin contains 25% by mass or more and 100% by mass or less of an amorphous polyamide resin.

8. A laminate comprising the barrier film according to any one of claims 1 to 7, and a sealant layer.

9. A laminate comprising a second polypropylene base material, the barrier film according to any one of claims 1 to 7, and a sealant layer.

**10.** A packaging bag comprising the laminate according to claim 8.

# FIG. 1

100A

130
120
115
110

FIG. 2

# FIG. 3

# FIG. 4

# FIG. 5

FIG. 6

# FIG. 7

100

140

162

130
120
115
100A
110

161

150

# FIG. 8

FIG. 9

EP 4 782 203 A1

# FIG. 10

Example1

EP 4 782 203 A1

FIG. 11

Example2

EP 4 782 203 A1

# FIG. 12

Example3

EP 4 782 203 A1

# FIG. 13

Comparative Example1

Energy[eV]

Intensity[arb.units]

FIG. 14

Comparative Example2

EP 4 782 203 A1

FIG. 15

Comparative Example3

FIG. 16

Comparative Example4

EP 4 782 203 A1

# FIG. 17

Comparative Example5

EP 4 782 203 A1

TRANSLATION

## INTERNATIONAL SEARCH REPORT

| International application No. |
| --- |
| **PCT/JP2025/031320** |

### A. CLASSIFICATION OF SUBJECT MATTER

***B32B 9/00*** (2006.01)i; ***B32B 27/32*** (2006.01)i; ***B65D 65/40*** (2006.01)i
FI: B32B9/00 A; B32B27/32 D; B32B27/32 101; B65D65/40 D

According to International Patent Classification (IPC) or to both national classification and IPC

### B. FIELDS SEARCHED

Minimum documentation searched (classification system followed by classification symbols)

B32B9/00; B32B27/32; B65D65/40

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2021/065878 A1 (DAI NIPPON PRINTING CO., LTD.) 08 April 2021 (2021-04-08) | 1-10 |
| A | WO 2023/074508 A1 (TOYOBO CO., LTD.) 04 May 2023 (2023-05-04) | 1-10 |
| A | WO 2024/070759 A1 (DAI NIPPON PRINTING CO., LTD.) 04 April 2024 (2024-04-04) | 1-10 |
| P, A | WO 2025/070809 A1 (DAI NIPPON PRINTING CO., LTD.) 03 April 2025 (2025-04-03) | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 November 2025** | **25 November 2025** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2025/031320**

| Patent document cited in search report | | | Publication date (day/month/year) | Patent family member(s) | | | Publication date (day/month/year) |
|---|---|---|---|---|---|---|---|
| WO | 2021/065878 | A1 | 08 April 2021 | US | 2022/0396870 | A1 | |
| | | | | EP | 4039463 | A1 | |
| | | | | CN | 114450158 | A | |
| WO | 2023/074508 | A1 | 04 May 2023 | EP | 4427928 | A1 | |
| | | | | TW | 202327884 | A | |
| WO | 2024/070759 | A1 | 04 April 2024 | TW | 202421438 | A | |
| WO | 2025/070809 | A1 | 03 April 2025 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7355957 B

- JP 6902231 B